# EUROPÄISCHE PATENTSCHRIFT

(11) **EP 4 013 562 B1**
(45) Veröffentlichungstag und Bekanntmachung des Hinweises auf die Patenterteilung: **23.08.2023**
(21) Anmeldenummer: 20739856.1
(22) Anmeldetag: 29.06.2020
(51) Int. Cl.: B23B 31/08

(54) **GEWINDESCHNEIDFUTTER**
THREAD-CUTTING CHUCK
MANDRIN DE COUPE DE FIL

(30) Priorität: 12.08.2019 DE 102019005644
(43) Veröffentlichungstag der Anmeldung: 22.06.2022
(73) Patentinhaber: Hakki, Aygün, 72505 Krauchenwies (DE)
(72) Erfinder: Hakki, Aygün, 72505 Krauchenwies (DE)
(74) Vertreter: Stadler, Franz
(86) Internationale Anmeldenummer: PCT/EP2020/000122
(87) Internationale Veröffentlichungsnummer: WO 2021/028065

(56) Entgegenhaltungen:
- WO-A1-2018/212107
- DE-A1- 2 001 007
- DE-A1-102012 218 947
- DE-A1-102013 106 589
- DE-U1-202015 102 119
- US-A1- 2009 209 356

## Beschreibung

Die vorliegende Erfindung betrifft ein Gewindeschneidfutter zum Synchron-Gewindeschneiden gemäß dem Oberbegriff des Anspruches 1 und ein Verfahren zum Betreiben eines Gewindeschneidfutters gemäß dem Oberbegriff des Anspruches 9. Ein derartiges Gewindeschneidfutter und ein derartiges Verfahren sind aus dem Dokument US 2009/209356 A1 bekannt.

Beim Gewindeschneiden wird mit einem Gewindebohrer in ein Werkstück ein Gewinde eingearbeitet bzw. eingeschnitten. Das Gewinde des Gewindebohrers weist eine bestimmte Steigung auf. Entsprechend der Steigung des Gewindebohrers ist es notwendig, während des Einschneidens des Gewindes den Gewindebohrer in einer Axialrichtung als einer Translationsbewegung zu bewegen und dies wird von einem maschinenseitigen Antrieb, insbesondere einer CNC-Werkzeugmaschine, ausgeführt. Darüber hinaus führt der Gewindebohrer auch eine Rotationsbewegung in einer bestimmten Drehrichtung zum Einschneiden des Gewindes auf. Die Translationsgeschwindigkeit wird auch als Vorschubgeschwindigkeit bezeichnet und diese hängt von der Steigung des Gewindebohrers ab. Bei CNC-Werkzeugmaschinen synchronisiert ein Computer den Gewindeschneidprozess dahingehend, dass die Maschinenlinearbewegung als der Axialbewegung und die Maschinendrehbewegung als der Dreh- oder Rotationsbewegung von entsprechenden Impulsgebern erfasst wird. Dabei kann jedoch die Genauigkeit der Maschinendrehbewegung und der Maschinenlinearbewegung nicht ganz genau erfasst werden und auch bei der Herstellung des Gewindes treten für die Steigung des Gewindebohrers Abweichungen auf. Eine genaue Synchronisierung des Vorschubs der Maschinenspindel bzw. des Gewindeschneidfutters zur Rotationsbewegung ist nicht ganz genau möglich.

Um das Auftreten von großen Axialkräften an dem Gewindeschneidfutter in Zug- und Druckrichtung, insbesondere beim Reversieren, das heißt beim Umkehren der Drehbewegung am Ende des Gewindeschneidprozesses zum Herausdrehen des Gewindebohrers, zu verhindern, ist es bereits bekannt, mit Elastomerelementen eine Abfederung eines axialen Spiels in Axialrichtung des Gewindeschneidfutters und eines tangentialen Spiels in Drehrichtung des Gewindeschneidfutters zwischen einem Aufnahmeschaft und einem Spannmittel für den Gewindebohrer aufgrund der elastischen Eigenschaften des Elastomerelements auszuführen. Das Elastomerelement weist dabei jedoch in zwei Axialrichtungen, die zueinander entgegengesetzt ausgerichtet sind, eine im Wesentlichen gleiche Federkonstante auf. Dies gilt in analoger Weise auch für zwei zueinander entgegengesetzt ausgerichtete Drehrichtungen. Beim Einschneiden eines Gewindes in eine Bohrung eines Werkstücks mit einem Gewindebohrer ist es jedoch im Allgemeinen notwendig und wünschenswert, für eine Optimierung des Gewindeschneidprozesses bei der Axialbewegung für die Zug- und Druckrichtung eine unterschiedliche Federkonstante des Elastomerelements zur Abfederung des axialen Spiels zur Verfügung zu haben. Dies gilt analog auch für die Drehrichtung, das heißt, für das Einschneiden in einer Drehrichtung und für die Drehrichtung entgegengesetzt hierzu nach dem Reversieren.

Die EP 0 887 135 A1 zeigt ein Gewindeschneidfutter für CNC-Maschinentechnologie "rigid tapping", mit einem in einem Futterschaft gehalterten Spannmittel, insbesondere einer Spannzange, für den Gewindebohrer, wobei dem Spannmittel und dem Futterschaft ein Aufnahmeteil zwischengeordnet ist, das in Drehrichtung spielfrei im Futterschaft gehaltert ist und in axialer Richtung in Zug- und Druckrichtung ein geringes, über Elastomerverbindungen abgefedertes, axiales Spiel auf.

Die DE 20 2015 102 119 U1 zeigt ein Gewindeschneidfutter zum Synchron-Gewindeschneiden, mit einem Aufnahmeteil zum maschinenseitigen Antrieb, und mit einem Spannmittel für einen Gewindebohrer, zwischen denen ein Zwischenteil angeordnet ist, wobei das Zwischenteil mit dem Aufnahmeteil in Axialrichtung über mindestens ein Elastomerelement nachgiebig verbunden ist, wobei mindestens eine erste Kugel zur Drehmomentübertragung zwischen dem Aufnahmeteil und dem Zwischenteil mit einem Spiel in Drehrichtung und in Axialrichtung aufgenommen ist, und dass mindestens eine zweite Kugel in Radialrichtung beweglich im Aufnahmeteil aufgenommen ist, die über das Elastomerelement derart mit dem Spannmittel gekoppelt ist, dass sich eine über das Elastomerelement abgefederte Nachgiebigkeit in Axialrichtung und in Drehrichtung ergibt. Die zweite Kugel bildet somit ein erstes Auflageelement für das Elastomerelement und das Zwischenteil bildet ein zweites Auflageelement für das Elastomerelement.

Die US 2009/209356 A1 zeigt ein Gewindeschneidfutter mit einem Aufnahmeschaft, einem Zwischenteil, einem Spannmittel und einem Elastomerelement.

Die DE 10 2012 218947 A1 offenbart ein Spannfutter für ein drehangetriebenes Schaftwerkzeug, insbesondere ein Gewindewerkzeug, mit einem sich entlang einer Drehachse erstreckenden Grundkörper und einer in einer stirnseitig offenen, zentrischen Axialbohrung im Grundkörper axial- und drehelastisch verankerten Spanneinrichtung zum Aufnehmen des Schaftwerkzeugs, wobei durch einen grundkörperseitig axial- und drehfest abgestützten Anker, der sich axial in die Aufnahmebohrung erstreckt und an dem die Spanneinrichtung dreh- und axialelastisch verankert ist.

Die DE 10 2013 106589 A1 offenbart einen Werkzeugadapter, umfassend: einen Adapterkörper mit einem Verbindungsabschnitt, der strukturiert ist, um an einem Maschinenwerkzeug befestigt zu werden, und einem Halterabschnitt, der gegenüber dem Verbindungsabschnitt angeordnet ist; und eine Werkzeugaufnahme, die zum Aufnehmen und Koppeln eines Abschnitts eines Drehschneidwerkzeugs darin strukturiert ist, wobei die Werkzeugaufnahme in dem Halterabschnitt montiert ist, damit diese um eine zentrale Achse M des Werkzeugadapters in begrenztem Maße drehbar ist, wobei die Werkzeugaufnahme in dem Halterabschnitt montiert ist, um sowohl in axialer als auch in Umfangsrichtung elastisch dehnbar zu sein.

Die Aufgabe der vorliegenden Erfindung besteht deshalb darin, ein Gewindeschneidfutter und ein Verfahren zum Betreiben eines Gewindeschneidfutters zur Verfügung zu stellen, bei dem die prozesstechnischen Anforderungen zur Einarbeitung eines Gewindes mit einem Gewindebohrer für die Beanspruchung in unterschiedlichen Axial- und/oder Tangentialrichtungen optimiert sind.

Diese Aufgabe wird gelöst mit einer Gewindeschneidfutter zum Synchron-Gewindeschneiden, umfassend einen Aufnahmeschaft als Komponente des Gewindeschneidfutters zum maschinenseitigen Antrieb, ein Zwischenteil als Komponente des Gewindeschneidfutters, ein Spannmittel als Komponente des Gewindeschneidfutters zur Fixierung eines Gewindebohrers, wobei mit dem Zwischenteil der Aufnahmeschaft mit dem Spannmittel verbunden ist, ein Elastomerelement zur Abfederung eines axialen Spiels in Axialrichtung des Gewindeschneidfutters und eines tangentialen Spiels in Drehrichtung des Gewindeschneidfutters zwischen dem Aufnahmeschaft und dem Spannmittel aufgrund der elastischen Eigenschaften des Elastomerelementes, ein erstes Auflageelement zum Aufbringen einer Kraft auf das Elastomerelement und das erstes Auflageelement auf dem Elastomerelement aufliegt, ein zweites Auflageelement zum Aufbringen einer Kraft auf das Elastomerelement und das zweite Auflageelement auf dem Elastomerelement aufliegt, wobei vorzugsweise das Elastomerelement in einer ersten Axialrichtung eine größere Federkonstante aufweist als in einer zweiten Axialrichtung und die erste und zweite Axialrichtung entgegengesetzt zueinander ausgerichtet sind und/oder vorzugsweise das Elastomerelement in einer ersten Drehrichtung eine größere Federkonstante aufweist als in einer zweiten Drehrichtung und die erste und zweite Drehrichtung entgegengesetzt zueinander ausgerichtet sind. Die Federkonstante als Proportionalitätsfaktor des Elastomerelementes wird gemäß dem Hookeschen Gesetz bestimmt. Vorzugsweise ist dabei die Federkonstante in der ersten Axialrichtung um 10 %, 20 %, 30 %, 50 %, 70 %, 100 %, 150 %, 200 % oder 300 % größer größer als die Federkonstante in der zweiten Axialrichtung. Vorzugsweise ist die Federkonstante des Elastomerelements in der ersten Drehrichtung um 10 %, 30 %, 50 %, 70 %, 100 %, 150 %, 200 % oder 300 % größer als die Federkonstante in der zweiten Drehrichtung.

In einer weiteren Ausführungsform ist das Gewindeschneidfutter, insbesondere das Elastomerelement und das erste und zweite Auflageelement, dahingehend ausgebildet, dass das erste und zweite Auflageelement auf dem Elastomerelement zum Aufbringen einer Druckkraft auf dem Elastomerelement aufliegt zur Abfederung des axialen und/oder tangentialen Spiels. Die Abfederung des axialen und/oder tangentialen Spiels erfolgt somit dadurch, dass von dem ersten und zweiten Auflageelement auf das Elastomerelement eine Druckkraft aufgebracht wird.

In einer ergänzenden Variante ist das Elastomerelement zwischen dem ersten und zweiten Auflageelement in Axialrichtung in einen ersten Axialabschnitt und einen zweiten Axialabschnitt unterteilt.

Zweckmäßig weist der erste Axialabschnitt in Axialrichtung eine kleinere Ausdehnung auf als der zweite Axialabschnitt in Axialrichtung, so dass das Elastomerelement in der ersten Axialrichtung die größere Federkonstante aufweist als in der zweiten Axialrichtung. Aufgrund der unterschiedlichen Ausdehnung des ersten und zweiten Axialabschnitts kann somit auch bei einem konstanten Elastizitätsmoduls des Elastomerelements aufgrund der unterschiedlichen Ausdehnung des ersten und zweiten Axialabschnitts das Elastomerelement in der ersten und zweiten Axialrichtung eine unterschiedliche Federkonstante aufweisen. Je größer die Ausdehnung eines Axialabschnitts ist, desto kleiner ist die Federkonstante dieses Axialabschnitts und umgekehrt bei einem konstanten Elastizitätsmodul des Elastomerelementes.

In einer weiteren Ausgestaltung weist der erste Axialabschnitt in Axialrichtung ein größeres Elastizitätsmodul auf als der zweite Axialabschnitt in Axialrichtung, so dass das Elastomerelement in der ersten Axialrichtung die größere Federkonstante aufweist als in der zweiten Axialrichtung. Je größer das Elastizitätsmodul eines Axialabschnitts ist, desto größer ist die Federkonstante dieses Axialabschnitts.

In einer weiteren Ausgestaltung ist das Elastomerelement zwischen dem ersten und zweiten Auflageelement in Drehrichtung in einen ersten Tangentialabschnitt und einen zweiten Tangentialabschnitt unterteilt.

In einer ergänzenden Ausführungsform weist der erste Tangentialabschnitt in Tangentialrichtung eine kleinere Ausdehnung auf als der zweite Tangentialabschnitt in Tangentialrichtung, so dass das Elastomerelement in der ersten Tangentialrichtung die größere Federkonstante aufweist als in der zweiten Tangentialrichtung. Je größer die Ausdehnung eines Tangentialabschnitts ist, desto kleiner ist die Federkonstante dieses Tangentialabschnitts und umgekehrt bei einem konstanten Elastizitätsmodul des Elastomerelementes.

In einer zusätzlichen Variante weist der erste Tangentialabschnitt in Tangentialrichtung ein größeres Elastizitätsmodul auf als der zweite Tangentialabschnitt in Tangentialrichtung, so dass das Elastomerelement in der ersten Tangentialrichtung die größere Federkonstante aufweist als in der zweiten Tangentialrichtung.

In einer zusätzlichen Ausgestaltung ist das erste Auflageelement als ein Stift ausgebildet und das zweite Auflageelement als eine Begrenzung einer Aussparung ausgebildet oder umgekehrt.

In einer zusätzlichen Variante weist das Elastomerelement eine Bohrung auf und der Stift ist in der Bohrung angeordnet, so dass der Stift auf einer Teilaußenseite des Elastomerelementes, welches die Bohrung begrenzt, aufliegt und eine andere Teilaußenseite des Elastomerelementes liegt auf dem zweiten Auflageelement als der Begrenzung der Aussparung auf.

In einer ergänzenden Ausführungsform ist der Stift an dem Aufnahmeschaft befestigt und die Aussparung ist an dem Zwischenteil, insbesondere einem hülsenförmigen Abschnitt des Zwischenteiles, ausgebildet.

In einer zusätzlichen Ausgestaltung ist der Stift und/oder die Aussparung im Wesentlichen in radialer Richtung ausgerichtet. Im Wesentlichen radiale Richtung bedeutet vorzugsweise, dass der Stift und/oder die Aussparung mit einer Abweichung von weniger als 30°, 20°, 10° oder 5° zu einer Radialrichtung ausgerichtet sind.

In einer weiteren Ausgestaltung weist das Gewindeschneidfutter einen axialen Anschlag zur Begrenzung des abgefederten axialen Spiels mit einem ersten Axialanschlagelement und einem zweiten Axialanschlagelement auf und das Gewindeschneidfutter weist einen tangentialen Anschlag zur Begrenzung des abgefederten tangentialen Spiels mit einem ersten Tangentialanschlagelement und einem zweiten Tangentialanschlagelement auf. In einem Gewindeschneidfutter kann die Abfederung des axialen Spiels bzw. das axiale Spiel nicht unbegrenzt sein, sodass dadurch für eine genaue Begrenzung des axialen Spiels ein axialer Anschlag notwendig ist und dies gilt in analoger Weise für das tangentiale Spiel als ein Spiel für unterschiedliche Drehpositionen des Gewindebohrers.

In einer ergänzenden Variante sind das erste Axialanschlagelement und/oder das erste Tangentialanschlagelement als ein Bolzen ausgebildet und das zweite Axialanschlagelement und/oder das zweite Tangentialanschlagelement als eine radiale Begrenzung und/oder axiale Begrenzung einer Ausnehmung ausgebildet und der Bolzen ist innerhalb der Ausnehmung angeordnet.

In einer zusätzlichen Ausgestaltung ist der Bolzen an dem Zwischenteil befestigt und die Aussparung ist an dem Aufnahmeschaft ausgebildet oder umgekehrt.

In einer zusätzlichen Variante ist das erste Axialanschlagelement mit einem Spiel in der ersten und zweiten Axialrichtung bezüglich des zweiten Axialanschlagelements angeordnet.

In einer zusätzlichen Variante ist das erste Tangentialanschlagelement mit einem Spiel in der ersten und zweiten Tangentialrichtung bezüglich des zweiten Tangentialanschlagelements angeordnet.

In einer ergänzenden Ausgestaltung liegt das erste und/oder zweite Auflageelement mit einer Druckkraft auf dem Elastomerelement auf.

Vorzugsweise liegt das erste und/oder zweite Auflageelement mittelbar oder unmittelbar auf dem Elastomerelement auf.

In einer weiteren Ausführungsform ist das Elastomerelement in der Axialrichtung von dem ersten oder zweiten Auflageelement und/oder einer Bohrung in dem Elastomerelement in den ersten und zweiten Axialabschnitt unterteilt.

In einer weiteren Ausführungsform ist das Elastomerelement in der Drehrichtung von dem ersten oder zweiten Auflageelement und/oder einer Bohrung in dem Elastomerelement in den ersten und zweiten Tangentialabschnitt unterteilt.

Zweckmäßig ist das Elastomerelement aus einem Elastomer, insbesondere Gummi und/oder NBR und/oder SBR (Styrol-Butadien-Kautschuk) und/oder EPDM und/oder FKM und/oder Silikon, ausgebildet.

In einer weiteren Ausgestaltung liegt der Elastizitätsmodul in GPa des Elastomerelementes zwischen 0,05 und 10, insbesondere zwischen 0,5 und 5.

In einer weiteren Ausgestaltung ist das Elastomerelement aus Kunststoff, insbesondere CFK und/oder GFK, vorzugsweise faserverstärkter CFK und/oder faserverstärkter GFK, ausgebildet.

In einer zusätzlichen Variante ist das Elastomerelement aus Textilien und/oder Leder und/oder Metall, insbesondere Stahl und/oder Messing und/oder Aluminium, ausgebildet.

In einer ergänzenden Ausführungsform ist das Elastomerelement aus Papier oder Papier, insbesondere Papier oder Pappe mit Wabenstruktur, ausgebildet.

In einer zusätzlichen Variante ist bzw. sind in dem Elastomerelement wenigstens ein Hohlraum, vorzugsweise mehrere Hohlräume, insbesondere als wenigstens eine Durchgangsöffnung, ausgebildet. Der wenigstens eine Hohlraum verkleinert die Federkonstante des Elastomerelementes, so dass das Elastomerelement bei einer großen Anzahl an Hohlräumen ungefähr nach dem Prinzip einer Blattfeder mit mehreren Federblättern fungiert.

In einer weiteren Ausgestaltung ist der wenigstens eine Hohlraum des Elastomerelementes im Querschnitt im Wesentlichen sichelförmig und/oder halbkreisförmig und/oder ellipsenförmig und/oder kreisförmig ausgebildet.

Zweckmäßig ist in dem wenigstens einen Hohlraum kein Auflageelement angeordnet. Bei einem Aufbringen einer Kraft, insbesondere Druckkraft, auf das Elastomerelement kann sich somit das Elastomerelement verformen und das Volumen des wenigstens einen Hohlraumes verkleinert sich.

In einer weiteren Variante sind der Aufnahmeschaft und/oder das Zwischenteil und/oder das Spannmittel aus Metall, insbesondere Stahl, ausgebildet.

In einer ergänzenden Ausführungsform ist mit dem in dieser Schutzrechtsanmeldung beschriebenen Gewindeschneidfutter ein in dieser Schutzrechtsanmeldung beschriebenes Verfahren ausführbar.

In einer weiteren Variante wird das in dieser Schutzrechtsanmeldung beschriebene Verfahren mit einem in dieser Schutzrechtsanmeldung beschriebenen Gewindeschneidfutter ausgeführt.

Vorzugsweise ist dabei die Federkonstante in der ersten Axialrichtung um wenigstens 10 %, 20 %, 30 %, 50 %, 70 %, 100 %, 150 %, 200 % oder 300 % größer als die Federkonstante in der zweiten Axialrichtung. Vorzugsweise ist die Federkonstante des Elastomerelements in der ersten Drehrichtung um wenigstens 10 %, 30 %, 50 %, 70 %, 100 %, 150 %, 200 % oder 300 % größer als die Federkonstante in der zweiten Drehrichtung.

In einer ergänzenden Ausgestaltung ist das Elastomerelement wenigstens teilweise, insbesondere vollständig, aus einem nichtmetallischen Werkstoff ausgebildet.

In einer ergänzenden Ausgestaltung ist das Elastomerelement zu wenigstens 50, 60, 70, 80, 90 oder 95 Masse-%, insbesondere vollständig, aus einem nichtmetallischen Werkstoff ausgebildet.

In einer ergänzenden Ausgestaltung ist das Elastomerelement wenigstens teilweise, insbesondere vollständig, aus einem Werkstoff mit einem Elastizitätsmodul in GPa zwischen 0,05 und 10, insbesondere zwischen 0,5 und 5 ausgebildet.

In einer ergänzenden Ausgestaltung ist das Elastomerelement zu wenigstens 50, 60, 70, 80, 90 oder 95 Masse-%, insbesondere vollständig, aus einem Werkstoff mit einem Elastizitätsmodul in GPa zwischen 0,05 und 10, insbesondere zwischen 0,5 und 5, ausgebildet.

In einer zusätzlichen Ausgestaltung umfasst das Gewindeschneidfutter mehrere, vorzugsweise 2, 3 oder 4, Elastomerelemente und die mehreren Elastomerelemente, insbesondere sämtliche Elastomerelemente, dienen zur Abfederung des axialen Spiels in Axialrichtung des Gewindeschneidfutters und/oder des tangentialen Spiels in Drehrichtung des Gewindeschneidfutters zwischen dem Aufnahmeschaft mit Gewindebohrer und dem Spannmittel aufgrund der elastischen Eigenschaften des Elastomerelementes.

In einer zusätzlichen Ausgestaltung umfasst das Gewindeschneidfutter mehrere, vorzugsweise 2, 3 oder 4, Elastomerelemente und mit den mehreren Elastomerelemente, insbesondere sämtlichen Elastomerelementen, wird die Abfederung des axialen Spiels in Axialrichtung des Gewindeschneidfutters und des tangentialen Spiels in Drehrichtung des Gewindeschneidfutters zwischen dem Aufnahmeschaft mit Gewindebohrer und dem Spannmittel aufgrund der elastischen Eigenschaften des Elastomerelementes ausgeführt.

In einer ergänzenden Ausgestaltung ist und/oder sind in einer Schnittebene senkrecht zu einer Rotationsachse des Gewindeschneidfutters je ein Elastomerelement, insbesondere sämtliche jeweilige Elastomerelemente, ausschließlich an je einem Teilwinkelbereich ausgebildet und der Teilwinkelbereich in der Schnittebene ist von zwei Halbgeraden beginnend an der Rotationsachse begrenzt und die zwei Halbgeraden an den äußeren Enden des je einen Elastomerelements in der Schnittebene aufliegen, wobei vorzugsweise der Teilwinkelbereich zwischen 1° und 45°, insbesondere zwischen 3° und 30°, liegt. Die Elastomerelemente sind somit vorzugsweise in Tangentialrichtung lediglich als Segmente mit Abständen zwischen den Elastomerelementen in Tangentialrichtung ausgebildet.

In einer ergänzenden Ausgestaltung ist und/oder sind in einer Schnittebene senkrecht zu einer Rotationsachse des Gewindeschneidfutters je ein Elastomerelement, insbesondere sämtliche jeweilige Elastomerelemente, ausschließlich außerhalb eines radialen Abstandes zu der Rotationsachse des Elastomerelementes ausgebildet, wobei vorzugweise der radiale Abstand zwischen 5% und 95%, vorzugweise zwischen 50% und 90% der maximalen radialen Ausdehnung des Gewindeschneidfutters liegt. Das je eine Elastomerelement ist damit ausschließlich an einem radialen Randbereich des Gewindeschneidfutters ausgebildet und kann damit leicht ausgewechselt werden.

In einer ergänzenden Ausführungsform bildet eine radiale Außenseite des je einen Elastomerelements, insbesondere sämtliche radialen Außenseiten sämtlicher Elastomerelemente, je eine radiale Außenseite des Gewindeschneidfutters. Die radialen Außenseiten der Elastomerelemente sind damit von außen sichtbar und die Elastomerelemente können einfach ausgewechselt werden.

Zweckmäßig ist das wenigstens eine Elastomerelement keine Tellerfeder und/oder keine Schraubenfeder.

In einer ergänzenden Ausgestaltung wird während der Translationsbewegung und Rotationsbewegung des Gewindebohrers in der Bohrung des Werkstückes eine relative maximale Translationsbewegung in der ersten und zweiten Axialrichtung zwischen dem Spannmittel mit Gewindebohrer und dem Aufnahmeschaft zwischen 2 mm und 20 µm, insbesondere zwischen 1,5 mm und 50 µm, ausgeführt, wobei vorzugsweise die relative maximale Translationsbewegung von wenigstens einem Axialanschlagelement begrenzt wird.

In einer ergänzenden Ausgestaltung wird während der Translationsbewegung und Rotationsbewegung des Gewindebohrers in der Bohrung des Werkstückes eine relative maximale Rotationsbewegung in der ersten und zweiten Drehrichtung zwischen dem Spannmittel und dem Aufnahmeschaft mit einem Winkel zwischen 0,01° und 3°, insbesondere 0,1° und 2°, ausgeführt wird, wobei vorzugsweise die relative maximale Rotationsbewegung von wenigstens einem Tangentialanschlagelement begrenzt wird.

In einer ergänzenden Ausgestaltung weist das Elastomerelement einen ersten Axialabschnitt und einen zweiten Axialabschnitt in Axialrichtung und einen ersten Tangentialabschnitt und zweiten Tangentialabschnitt in Tangentialrichtung auf und der erste Axialabschnitt dient zur elastischen Abfederung des axialen Spiels in der ersten Axialrichtung und der zweite Axialabschnitt dient zur Abfederung des axialen Spiels in der zweiten Axialrichtung und der erste Tangentialabschnitt dient zur elastischen Abfederung des tangentialen Spiels in der ersten Drehrichtung und der zweite Tangentialabschnitt dient zur elastischen Abfederung in der zweiten Drehrichtung.

Vorzugsweise ist die für die elastische Verformung relevante Ausdehnung des ersten und zweiten Axialabschnittes in Axialrichtung bestimmt. Vorzugsweise ist die für die elastische Verformung relevante Ausdehnung des ersten und zweiten Tangentialabschnittes in Tangentialrichtung bestimmt.

Zweckmäßig sind der erste und zweite Axialabschnitt des Elastomerelementes unterschiedliche Bereiche des Elastomerelementes. Zweckmäßig sind der erste und zweite Tangentialabschnitt des Elastomerelementes unterschiedliche Bereiche des Elastomerelementes.

In einer weiteren Ausgestaltung sind der erste und zweite Axialabschnitt und/oder der erste und zweiten Tangentialabschnitt an je einem Elastomerelement, insbesondere an je einem einteiligen Elastomerelement, ausgebildet.

Vorzugsweise ist die Bohrung eine Sacklochbohrung oder eine Durchgangsbohrung.

Insbesondere ist das wenigstens eine Elastomerelement einteilig oder zweiteilig ausgebildet.

In einer ergänzenden Ausgestaltung bildet in einem Schnitt durch das Gewindeschneidfutter mit einer Schnittebene senkrecht zu der Rotationsachse des Gewindeschneidfutters das wenigstens eine Elastomerelement an wenigstens einem Teilbereich, vorzugsweise an mehreren Teilbereichen, die radiale Außenseite des Gewindeschneidfutters und vorzugsweise beträgt in dem Schnitt die Summe der Längen oder die Länge der radialen Außenseite des wenigstens einen Elastomerelements zwischen 1% und 40%, insbesondere zwischen 5% und 30%, der radialen Außenseite des gesamten Gewindeschneidfutters in dem Schnitt. Die radiale Außenseite des Gewindeschneidfutters ist somit in dem Schnitt an wenigstens einem Teilbereich, vorzugsweise an mehreren in Radialrichtung beanstandeten Teilbereichen, von dem wenigstens einen Elastomerelement gebildet.

In einer ergänzenden Ausgestaltung weist das Elastomerelement einen ersten Axialabschnitt und einen zweiten Axialabschnitt in Axialrichtung und einen ersten Tangentialabschnitt und zweiten Tangentialabschnitt in Tangentialrichtung auf und mit dem ersten Axialabschnitt, insbesondere ausschließlich, wird die elastischen Abfederung des axialen Spiels in der ersten Axialrichtung ausgeführt und mit dem zweiten Axialabschnitt, insbesondere ausschließlich, wird die Abfederung des axialen Spiels in der zweiten Axialrichtung ausgeführt und mit dem ersten Tangentialabschnitt, insbesondere ausschließlich, wird die elastischen Abfederung des tangentialen Spiels in der ersten Drehrichtung ausgeführt und mit dem zweiten Tangentialabschnitt, insbesondere ausschließlich, wird die elastischen Abfederung in der zweiten Drehrichtung ausgeführt und vorzugsweise sind die Axialrichtung des ersten und zweiten Axialabschnitts und die Tangentialrichtung des ersten und zweiten Tangentialabschnitts im Wesentlichen, insbesondere mit einer Abweichung von weniger als 30°, 20°, 10° oder 5°, zueinander senkrecht ausgerichtet.

In einer ergänzenden Ausgestaltung liegt das erste und/oder zweite Auflageelement, insbesondere ausschließlich, mit einer Druckkraft auf dem Elastomerelement auf.

In einer weiteren Ausgestaltung wird während der Translationsbewegung und Rotationsbewegung des Gewindebohrers in der Bohrung des Werkstückes mit dem Elastomerelement die Abfederung eines axialen Spiels in der ersten und zweiten Axialrichtung mit einer Beanspruchung des Elastomerelementes, insbesondere ausschließlich, mit einer Druckkraft ausgeführt.

In einer weiteren Ausgestaltung wird während der Translationsbewegung und Rotationsbewegung des Gewindebohrers in der Bohrung des Werkstückes mit dem Elastomerelement die Abfederung eines tangentialen Spiels in der ersten und zweiten Drehrichtung mit einer Beanspruchung des Elastomerelementes, insbesondere ausschließlich, mit einer Druckkraft ausgeführt.

In einer weiteren Variante umfasst das Gewindeschneidfutter mehrere Elastomerelemente.

Zweckmäßig wird das Verfahren mit mehreren Elastomerelementen ausgeführt, so dass mehrere Elastomerelemente simultan elastisch verformt werden und anschließend eine elastische Rückverformung ausgeführt wird.

Erfindungsgemäßes Verfahren zum Betreiben eines Gewindeschneidfutter zum Synchron-Gewindeschneiden mit den Schritten: formschlüssiges und/oder kraftschlüssiges Fixieren eines Gewindebohrers an einem Spannmittel als Komponente des Gewindeschneidfutters, Aufbringen einer Druckkraft in einer ersten Axialrichtung und/oder eines Drehmomentes in einer ersten Drehrichtung auf einen Aufnahmeschaft des Gewindeschneidfutters, so dass der Gewindebohrer in eine Bohrung eines Werkstückes eingeführt wird und während des Einführens in die Bohrung der Gewindebohrer aufgrund der auf den Aufnahmeschaft aufgebrachten Druckkraft von dem Gewindebohrer eine Translationsbewegung in der ersten Axialrichtung in die Bohrung hinein ausgeführt wird und/oder aufgrund des auf den Aufnahmeschaft aufgebrachten Drehmomentes von dem Gewindebohrer eine Rotationsbewegung in der ersten Drehrichtung in der Bohrung ausgeführt wird, so dass vorzugsweise von dem Gewindebohrer in die Bohrung ein Gewinde eingearbeitet wird, Aufbringen einer Zugkraft in einer zweiten Axialrichtung und/oder eines Drehmomentes in einer zweiten Drehrichtung auf den Aufnahmeschaft des Gewindeschneidfutters, wobei die erste und zweite Axialrichtung entgegengesetzt zueinander ausgerichtet sind und die erste und zweite Drehrichtung entgegengesetzt zueinander ausgerichtet sind, so dass vorzugsweise der Gewindebohrer aus der Bohrung des Werkstückes heraus bewegt wird und während des Herausbewegens aus der Bohrung der Gewindebohrer aufgrund der auf den Aufnahmeschaft aufgebrachten Zugkraft der Gewindebohrer mit einer Translationsbewegung in der zweiten Axialrichtung aus der Bohrung heraus bewegt wird und/oder aufgrund des auf den Aufnahmeschaft aufgebrachten Drehmomentes von dem Gewindebohrer eine Rotationsbewegung in der zweiten Drehrichtung in der Bohrung ausgeführt wird, während der Translationsbewegung und Rotationsbewegung des Gewindebohrers in der Bohrung des Werkstückes mit einem elastischen Elastomerelement eine Abfederung eines axialen Spiels in der ersten und/oder zweiten Axialrichtung ausgeführt wird, so dass eine relative Translationsbewegung in der ersten und/oder zweiten Axialrichtung zwischen dem Spannmittel mit Gewindebohrer und dem Aufnahmeschaft ausgeführt wird, während der Translationsbewegung und Rotationsbewegung des Gewindebohrers in der Bohrung des Werkstückes mit dem elastischen Elastomerelement eine Abfederung eines tangentialen Spiels in der ersten und/oder zweiten Drehrichtung ausgeführt wird, so dass eine relative Rotationsbewegung in der ersten und/oder zweiten Drehrichtung zwischen dem Spannmittel mit Gewindebohrer und dem Aufnahmeschaft ausgeführt wird, wobei vorzugsweise das Elastomerelement, insbesondere aus einem Werkstoff mit einem Elastizitätsmodul zwischen 0,05 und 10 GPa, in der ersten Axialrichtung eine um wenigstens 20% größere Federkonstante aufweist als in der zweiten Axialrichtung, so dass bei einer auf den Aufnahmeschaft in der ersten Axialrichtung wirkenden bestimmten Druckkraft und/oder bei einer auf den Aufnahmeschaft in der zweiten Axialrichtung wirkenden bestimmten Zugkraft bei einem identischen Betrag der bestimmten Druckkraft und/oder Zugkraft die relative Translationsbewegung in der ersten Axialrichtung zwischen dem Spannmittel mit Gewindebohrer und dem Aufnahmeschaft um wenigstens 20% kleiner ausgeführt wird als in der zweiten Axialrichtung oder das Elastomerelement, insbesondere aus einem Werkstoff mit einem Elastizitätsmodul zwischen 0,05 und 10 GPa, in der ersten Axialrichtung eine um wenigstens 20% kleinere Federkonstante aufweist als in der zweiten Axialrichtung, so dass bei einer auf den Aufnahmeschaft in der ersten Axialrichtung wirkenden bestimmten Druckkraft und/oder bei einer auf den Aufnahmeschaft in der zweiten Axialrichtung wirkenden bestimmten Zugkraft bei einem identischen Betrag der bestimmten Druckkraft und/oder Zugkraft die relative Translationsbewegung in der ersten Axialrichtung zwischen dem Spannmittel mit Gewindebohrer und dem Aufnahmeschaft um wenigstens 20% größer ausgeführt wird als in der zweiten Axialrichtung und/oder das Elastomerelement, insbesondere aus einem Werkstoff mit einem Elastizitätsmodul zwischen 0,05 und 10 GPa, in der ersten Drehrichtung eine um wenigstens 20% größere Federkonstante aufweist als in der zweiten Drehrichtung, so dass bei einer auf den Aufnahmeschaft in der ersten Drehrichtung wirkenden bestimmten Drehmoment und/oder bei einer auf den Aufnahmeschaft in der zweiten Drehrichtung wirkenden bestimmten Drehmoment bei einem identischen Betrag des bestimmten Drehmomentes die relative Rotationsbewegung in der ersten Drehrichtung zwischen dem Spannmittel mit Gewindebohrer und dem Aufnahmeschaft um wenigstens 20% kleiner ausgeführt wird als in der zweiten Drehrichtung oder das Elastomerelement, insbesondere aus einem Werkstoff mit einem Elastizitätsmodul zwischen 0,05 und 10 GPa, in der ersten Drehrichtung eine um wenigstens 20% kleinere Federkonstante aufweist als in der zweiten Drehrichtung, so dass bei einer auf den Aufnahmeschaft in der ersten Drehrichtung wirkenden bestimmten Drehmoment und/oder bei einer auf den Aufnahmeschaft in der zweiten Drehrichtung wirkenden bestimmten Drehmoment bei einem identischen Betrag des bestimmten Drehmomentes die relative Rotationsbewegung in der ersten Drehrichtung zwischen dem Spannmittel mit Gewindebohrer und dem Aufnahmeschaft um wenigstens 20% größer ausgeführt wird als in der zweiten Drehrichtung. Zweckmäßig wird während des Herausbewegens des Gewindebohrers aus der Bohrung auf den Aufnahmeschaft abwechselnd eine Zugkraft und eine Druckkraft aufgebracht. Vorzugsweise weist die bestimmte Druckkraft und/oder die bestimmte Zugkraft und/oder das bestimmte Drehmoment eine Größe auf, so dass die aus der bestimmten Druckkraft und/oder der bestimmten Zugkraft und/oder dem bestimmten Drehmoment resultierende, auf das Elastomerelement wirkende Verformungskraft, insbesondere als Druckkraft und/oder Zugkraft; eine Größe aufweist, die eine elastische Verformung des Elastomerelementes bewirkt, vorzugsweise die Größe der Verformungskraft zwischen 20% und 80%, beispielsweise 50%, der maximalen elastischen Verformungskraft beträgt und die maximale elastische Verformungskraft diejenige Verformungskraft ist bei der eine weitere Erhöhung der Verformungskraft der elastische Bereich der Verformung des Werkstoffes des Elastomerelementes verlassen wird.

Zweckmäßig weist das Elastomerelement, insbesondere aus einem Werkstoff mit einem Elastizitätsmodul zwischen 0,05 und 10 GPa, in der ersten Axialrichtung eine um wenigstens 10%, 20%, 30%, 50%, 70%, 100%, 150%, 200% oder 300% größere Federkonstante auf als in der zweiten Axialrichtung, so dass bei einer auf den Aufnahmeschaft in der ersten Axialrichtung wirkenden bestimmten Druckkraft und/oder bei einer auf den Aufnahmeschaft in der zweiten Axialrichtung wirkenden bestimmten Zugkraft bei einem identischen Betrag der bestimmten Druckkraft und Zugkraft die relative Translationsbewegung in der ersten Axialrichtung zwischen dem Spannmittel mit Gewindebohrer und dem Aufnahmeschaft um wenigstens 10%, 20%, 30%, 50%, 70%, 100%, 150%, 200% oder 300% kleiner ausgeführt wird als in der zweiten Axialrichtung.

Zweckmäßig weist das Elastomerelement, insbesondere aus einem Werkstoff mit einem Elastizitätsmodul zwischen 0,05 und 10 GPa, in der ersten Axialrichtung eine um wenigstens 10%, 20%, 30%, 50%, 70%, 100%, 150%, 200% oder 300% kleinere Federkonstante auf als in der zweiten Axialrichtung, so dass bei einer auf den Aufnahmeschaft in der ersten Axialrichtung wirkenden bestimmten Druckkraft und/oder bei einer auf den Aufnahmeschaft in der zweiten Axialrichtung wirkenden bestimmten Zugkraft bei einem identischen Betrag der bestimmten Druckkraft und/oder Zugkraft die relative Translationsbewegung in der ersten Axialrichtung zwischen dem Spannmittel mit Gewindebohrer und dem Aufnahmeschaft um wenigstens 10%, 20%, 30%, 50%, 70%, 100%, 150%, 200% oder 300% größer ausgeführt wird als in der zweiten Axialrichtung.

Zweckmäßig weist das Elastomerelement, insbesondere aus einem Werkstoff mit einem Elastizitätsmodul zwischen 0,05 und 10 GPa, in der ersten Drehrichtung eine um wenigstens 10%, 20%, 30%, 50%, 70%, 100%, 150%, 200% oder 300% größere Federkonstante aufweist als in der zweiten Drehrichtung, so dass bei einer auf den Aufnahmeschaft in der ersten Drehrichtung wirkenden bestimmten Drehmoment und/oder bei einer auf den Aufnahmeschaft in der zweiten Drehrichtung wirkenden bestimmten Drehmoment bei einem identischen Betrag des bestimmten Drehmomentes die relative Rotationsbewegung in der ersten Drehrichtung zwischen dem Spannmittel mit Gewindebohrer und dem Aufnahmeschaft um wenigstens 10%, 20%, 30%, 50%, 70%, 100%, 150%, 200% oder 300% kleiner ausgeführt wird als in der zweiten Drehrichtung.

Zweckmäßig weist das Elastomerelement, insbesondere aus einem Werkstoff mit einem Elastizitätsmodul zwischen 0,05 und 10 GPa, in der ersten Drehrichtung eine um wenigstens 10%, 20%, 30%, 50%, 70%, 100%, 150%, 200% oder 300% kleinere Federkonstante aufweist als in der zweiten Drehrichtung, so dass bei einer auf den Aufnahmeschaft in der ersten Drehrichtung wirkenden bestimmten Drehmoment und/oder bei einer auf den Aufnahmeschaft in der zweiten Drehrichtung wirkenden bestimmten Drehmoment bei einem identischen Betrag des bestimmten Drehmomentes die relative Rotationsbewegung in der ersten Drehrichtung zwischen dem Spannmittel mit Gewindebohrer und dem Aufnahmeschaft um wenigstens 10%, 20%, 30%, 50%, 70%, 100%, 150%, 200% oder 300% größer ausgeführt wird als in der zweiten Drehrichtung.

In einer weiteren Variante wird von der relativen Translationsbewegung in der ersten und zweiten Axialrichtung zwischen dem Spannmittel mit Gewindebohrer und dem Aufnahmeschaft eine, insbesondere ausschließliche, Druckkraft in dem Elastomerelement verursacht, so dass von der Druckkraft eine, insbesondere ausschließliche, Stauchung des Elastomerelementes, insbesondere wenigstens eines Axialabschnittes des Elastomerelementes, verursacht wird, wobei vorzugsweise nur der wenigstens eine Axialabschnitt gestaucht wird. Die Druckkraft verkleinert somit die Ausdehnung des Elastomerelementes.

In einer ergänzenden Ausgestaltung wird von der relativen Rotationsbewegung in der ersten und zweiten Axialrichtung zwischen dem Spannmittel mit Gewindebohrer und dem Aufnahmeschaft eine, insbesondere ausschließliche, Druckkraft in dem Elastomerelement verursacht, so dass von der Druckkraft eine, insbesondere ausschließliche, Stauchung des Elastomerelementes, insbesondere wenigstens eines Tangentialabschnitts des Elastomerelements verursacht wird, wobei vorzugsweise nur der wenigstens eine Tangentialabschnitt gestaucht wird.

Vorzugsweise verursacht die auf den Aufnahmeschaft in der ersten Axialrichtung wirkende Druckkraft und die auf den Aufnahmeschaft in der zweiten Axialrichtung wirkenden bestimmten Zugkraft eine auf das Elastomerelement wirkende Verformungskraft und diese Verformungskraft, insbesondere ausschließlich, in einem radialen Abstand zu einer Rotationsachse des Gewindeschneidfutters auf das Elastomerelement aufgebracht wird. Vorzugsweise beträgt der radiale Abstand zu der Rotationsachse wenigstens 5%, 10%, 20% oder 30% der maximalen radialen Ausdehnung des Gewindeschneidfutters. Zweckmäßig ist die auf das Elastomerelement wirkende Verformungskraft, insbesondere ausschließlich, eine Druckkraft und/oder eine Zugkraft und/oder ein Torsionsmoment und/oder eine Scherkraft.

In einer weiteren Ausführungsform verursacht das auf den Aufnahmeschaft in der ersten Drehrichtung wirkende Drehmoment und das auf den Aufnahmeschaft in der zweiten Drehrichtung wirkenden bestimmten Drehmoment eine auf das Elastomerelement wirkende Verformungskraft und diese Verformungskraft, insbesondere ausschließlich, in einem radialen Abstand zu einer Rotationsachse des Gewindeschneidfutters auf das Elastomerelement aufgebracht wird. Vorzugsweise beträgt der radiale Abstand zu der Rotationsachse wenigstens 5%, 10%, 20% oder 30% der maximalen radialen Ausdehnung des Gewindeschneidfutters.

In einer zusätzlichen Ausgestaltung weist das innere radiale Ende des Elastomerelementes einen radialen Abstand zu der Rotationsachse des Gewindeschneidfutters auf und in Tangentialrichtung das Elastomerelement ausschließlich an einem tangentialen Teilbereich ausgebildet ist, so dass das Elastomerelement ausschließlich in einem radialen Abstand zu der Rotationsachse und ausschließlich an dem tangentialen Teilbereich von der auf das Elastomerelement wirkenden Verformungskraft verformt wird. Vorzugsweise beträgt der radiale Abstand des inneren radialen Endes des Elastomerelementes zu der Rotationsachse wenigstens 5%, 10%, 20% oder 30% der maximalen radialen Ausdehnung des Gewindeschneidfutters.

In einer ergänzenden Variante wird wenigstens ein Elastomerelement ausgetauscht indem das wenigstens eine Elastomerelement aus je einer Aussparung, insbesondere ausschließlich, im Wesentlichen in Radialrichtung nach außen aus der je einen Aussparung heraus bewegt wird und anschließend wenigstens ein anderes Elastomerelement in die je eine Aussparung, insbesondere ausschließlich, im Wesentlichen in Radialrichtung nach innen hinein bewegt wird, so dass vorzugsweise anschließend das Gewindeschneidfutter in der ersten und/oder zweiten Axialrichtung eine andere Federkonstante aufweist und/oder in der ersten und/oder zweiten Drehrichtung eine andere Federkonstante aufweist. Im Wesentlichen in Radialrichtung bedeutet vorzugsweise mit einer Abweichung von weniger als 30°, 20°, 10° oder 5°. Das wenigstens eine Elastomerelement kann damit einfach zur Veränderung der Federkonstante ausgetauscht werden.

In einer weiteren Ausgestaltung weist das Gewindeschneidfutter einen axialen Anschlag zur Begrenzung des abgefederten axialen Spiels mit einem ersten Axialanschlagelement und einem zweiten Axialanschlagelement auf und das Gewindeschneidfutter weist einen tangentialen Anschlag zur Begrenzung des abgefederten tangentialen Spiels mit einem ersten Tangentialanschlagelement und einem zweiten Tangentialanschlagelement auf, so dass die relative Translationsbewegung zwischen dem Spannmittel mit Gewindebohrer und dem Aufnahmeschaft begrenzt wird und die relative Rotationsbewegung zwischen dem Spannmittel mit Gewindebohrer und dem Aufnahmeschaft begrenzt wird bei der Ausführung des Verfahrens.

In einer zusätzlichen Ausgestaltung weist das innere radiale Ende des Elastomerelementes einen radialen Abstand zu der Rotationsachse des Gewindeschneidfutters auf und in Tangentialrichtung ist das Elastomerelement nur an einem tangentialen Teilbereich ausgebildet.

Vorzugsweise wird bei der Bestimmung der Federkonstante des wenigstens einen Elastomerelementes nach dem Hookeschen Gesetz eine plastische Verformung des Elastomerelements nicht berücksichtigt, so dass keine Hysterese auftritt, d. h. es liegt somit vorzugsweise ein ideal-elastisches Verhalten des wenigstens einen Elastomerelementes vor. Vorzugsweise gibt die Federkonstante den Proportionalitätsfaktor einerseits zwischen dem Verformungsweg des wenigstens einen Elastomerelementes resultierend aus der auf das wenigstens eine Elastomerelement wirkenden Verformungskraft und andererseits der auf das wenigstens eine Elastomerelement wirkenden Verformungskraft an, wobei vorzugsweise eine Verformungskraft als Druckkraft eine Stauchung des wenigstens einen Elastomerelementes und/oder eine Verformungskraft als Zugkraft eine Dehnung des wenigstens einen Elastomerelementes und/oder eine Verformungskraft als Torsionsmoment eine Torsion des wenigstens einen Elastomerelementes und/oder eine Verformungskraft als Scherkraft eine Scherung des wenigstens einen Elastomerelements bewirkt und/oder bei der Verformungskraft lediglich der Betrag der Verformungskraft ohne Vorzeichen berücksichtigt wird und/oder in dem Gewindespannfutter das Spannmittel mit einem Mechanismus mit dem wenigsten einen Elastomerelement und/oder dem ersten und/oder zweiten Auflageelement mechanisch gekoppelt ist, so dass die in der ersten Axialrichtung wirkende Druckkraft an dem Aufnahmeschaft eine auf das wenigstens eine Elastomerelement wirkende Verformungskraft bewirkt und/oder ein Drehmoment in der ersten Drehrichtung an dem Aufnahmeschaft eine auf das wenigstens eine Elastomerelement wirkende Verformungskraft bewirkt und/oder die in der zweiten Axialrichtung wirkende Zugkraft an dem Aufnahmeschaft eine auf das wenigstens eine Elastomerelement wirkende Verformungskraft bewirkt und/oder ein Drehmoment in der zweiten Drehrichtung an dem Aufnahmeschaft eine auf das wenigstens eine Elastomerelement wirkende Verformungskraft bewirkt und vorzugsweise das Übersetzungsverhältnis einerseits zwischen der relativen Translationsbewegung in der ersten und/oder zweiten Axialrichtung zwischen dem Spannmittel mit Gewindebohrer und dem Aufnahmeschaft und/oder der relativen Rotationsbewegung in der ersten und/oder zweiten Drehrichtung zwischen dem Spannmittel mit Gewindebohrer und dem Aufnahmeschaft einerseits und dem resultierenden Verformungsweg an dem wenigstens einen Elastomerelement andererseits zwischen 1: 10 und 10:1, vorzugsweise zwischen 1:5 und 5:1, insbesondere 1:1, beträgt. Vorzugsweise ist die relativen Translationsbewegung in der ersten und/oder zweiten Axialrichtung zwischen dem Spannmittel mit Gewindebohrer und dem Aufnahmeschaft der relative Translationsweg in der ersten und/oder zweiten Axialrichtung zwischen dem Spannmittel mit Gewindebohrer und dem Aufnahmeschaft. Vorzugsweise ist die relative Rotationsbewegung in der ersten und/oder zweiten Drehrichtung zwischen dem Spannmittel mit Gewindebohrer und dem Aufnahmeschaft der relative Drehwinkel zwischen dem Spannmittel mit Gewindebohrer und dem Aufnahmeschaft.

Vorzugsweise wird das Verfahren mit wenigstens einem Elastomerelement aus einem Werkstoff mit einem Elastizitätsmodul zwischen 0,05 und 10 GPa, insbesondere zwischen 0,5 und 5 GPa, ausgeführt.

In einer weiteren Ausgestaltung ist die Ausdehnung des ersten und/oder zweiten Axialabschnittes kleiner als 90%, 80%, 70% oder 60% der axialen Gesamtausdehnung des Elastomerelementes.

In einer weiteren Ausgestaltung ist die Ausdehnung des ersten und/oder zweiten Tangentialabschnittes kleiner als 90%, 80%, 70% oder 60% der tangentialen Gesamtausdehnung des Elastomerelementes.

In einer weiteren Ausgestaltung ist die Ausdehnung des ersten und/oder zweiten Axialabschnittes größer als 10%, 20%, 30% oder 40% der axialen Gesamtausdehnung des Elastomerelementes.

In einer weiteren Ausgestaltung ist die Ausdehnung des ersten und/oder zweiten Tangentialabschnittes größer als 10%, 20%, 30% oder 40% der tangentialen Gesamtausdehnung des Elastomerelementes.

Zweckmäßig wird die Druckkraft, die Zugkraft und das Drehmoment mit einem Zwischenteil von dem Aufnahmeschaft auf das Spannmittel übertragen.

Im Nachfolgenden werden Ausführungsbeispiele der Erfindung unter Bezugnahme auf die beigefügten Zeichnungen näher beschrieben.

Es zeigt:
- Fig. 1: einen Längsschnitt eines Aufnahmeschaftes eines Gewindeschneidfutters,
- Fig. 2: einen Längsschnitt eines Zwischenteils des Gewindeschneidfutters,
- Fig. 3: eine Seitenansicht des Zwischenteils gemäß Fig. 2 des Gewindeschneidfutters,
- Fig. 4: einen Längsschnitt des Gewindeschneidfutters,
- Fig. 5: einen Querschnitt A-A gemäß Fig. 1 des Aufnahmeschaftes,
- Fig. 6: eine vergrößerten Teillängsschnitt des Gewindespannfutters gemäß Fig. 4,
- Fig. 7a: eine Draufsicht eines Elastomerelementes in einem ersten Ausführungsbeispiel bei einer ersten Anordnung,
- Fig. 7b: eine Draufsicht des Elastomerelementes in dem ersten Ausführungsbeispiel bei einer zweiten Anordnung
- Fig. 7c: eine perspektivische Ansicht des Elastomerelementes in dem ersten Ausführungsbeispiel,
- Fig. 8a: eine Draufsicht des Elastomerelementes in einem zweiten Ausführungsbeispiel bei einer ersten Anordnung,
- Fig. 8b: eine Draufsicht des Elastomerelementes in dem zweiten Ausführungsbeispiel bei einer zweiten Anordnung,
- Fig. 8c: eine Draufsicht des Elastomerelementes in dem zweiten Ausführungsbeispiel bei einer dritten Anordnung,
- Fig. 8d: eine Draufsicht des Elastomerelementes in dem zweiten Ausführungsbeispiel bei einer vierten Anordnung,
- Fig. 9a: eine Draufsicht des Elastomerelementes in einem dritten Ausführungsbeispiel bei einer ersten Anordnung,
- Fig. 9b: eine Draufsicht des Elastomerelementes in dem dritten Ausführungsbeispiel bei einer zweiten Anordnung,
- Fig. 9c: eine Draufsicht des Elastomerelementes in dem dritten Ausführungsbeispiel bei einer dritten Anordnung,
- Fig. 9d: eine Draufsicht des Elastomerelementes in dem dritten Ausführungsbeispiel bei einer vierten Anordnung,
- Fig. 10a: eine Draufsicht des Elastomerelementes in einem vierten Ausführungsbeispiel bei einer ersten Anordnung,
- Fig. 10b: eine Draufsicht des Elastomerelementes in dem vierten Ausführungsbeispiel bei einer zweiten Anordnung,

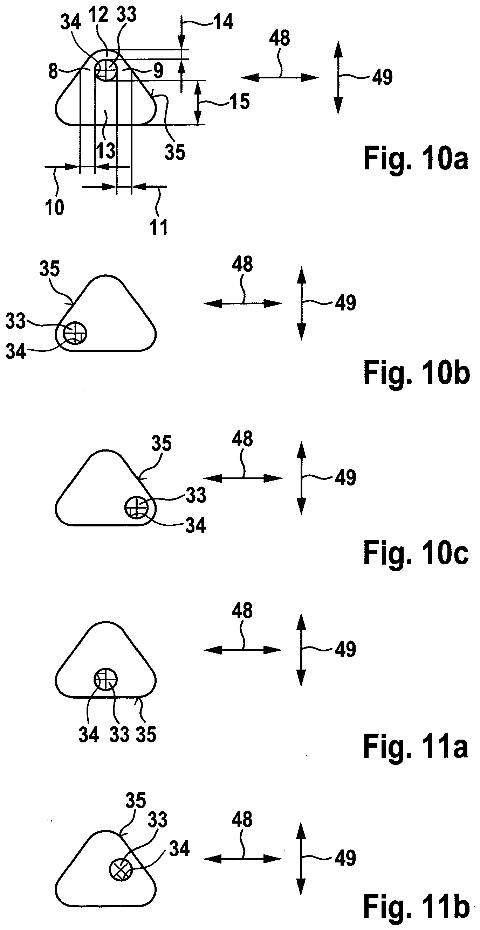

- Fig. 10a: eine Draufsicht des Elastomerelementes in dem vierten Ausführungsbeispiel bei einer dritten Anordnung,
- Fig. 11a: eine Draufsicht des Elastomerelementes in einem fünften Ausführungsbeispiel bei einer ersten Anordnung und
- Fig. 11b: eine Draufsicht des Elastomerelementes in dem fünften Ausführungsbeispiel bei einer zweiten Anordnung.

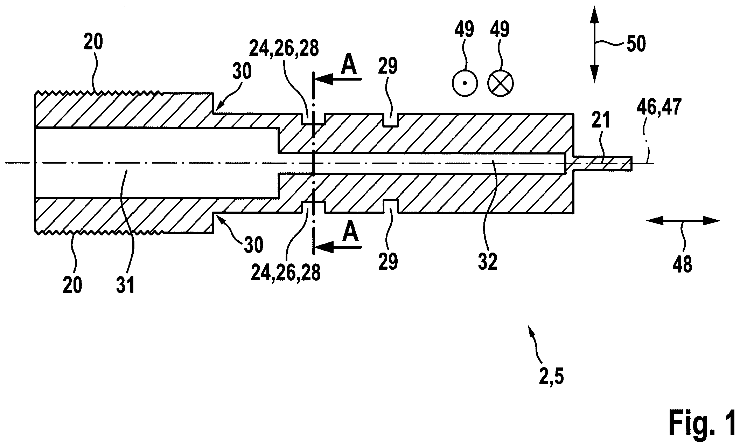

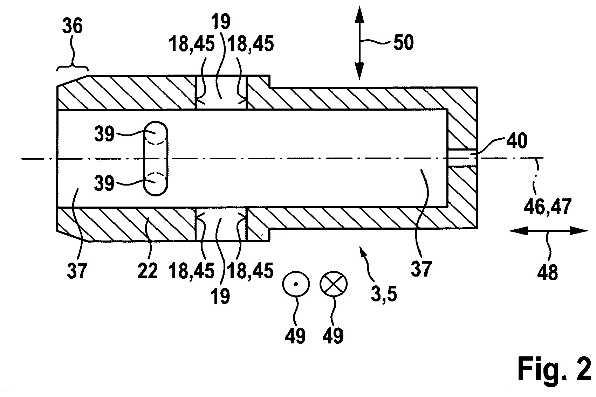

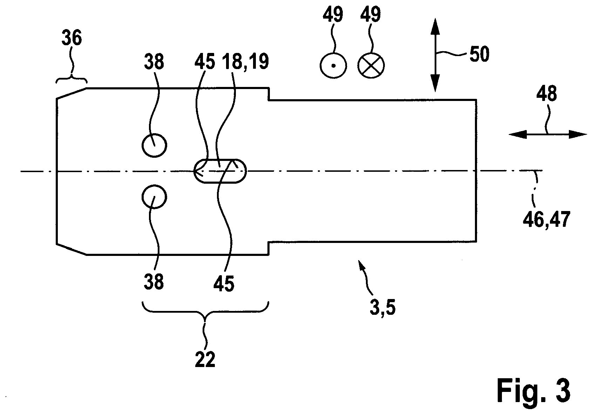

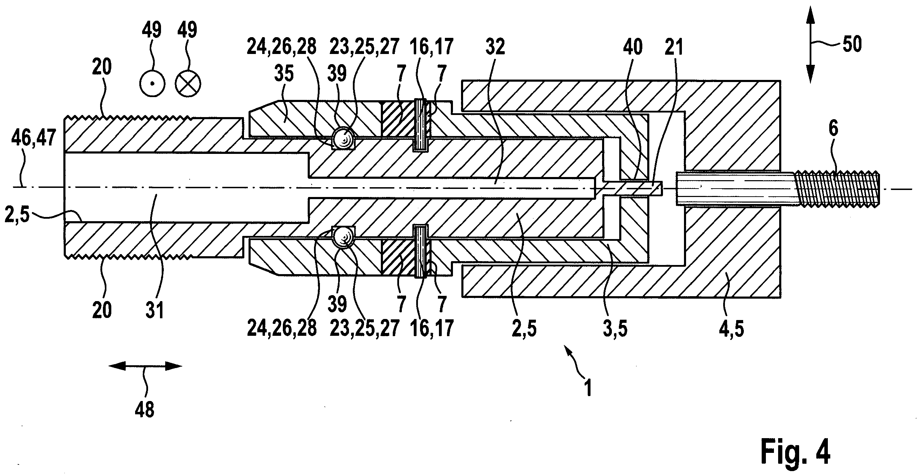

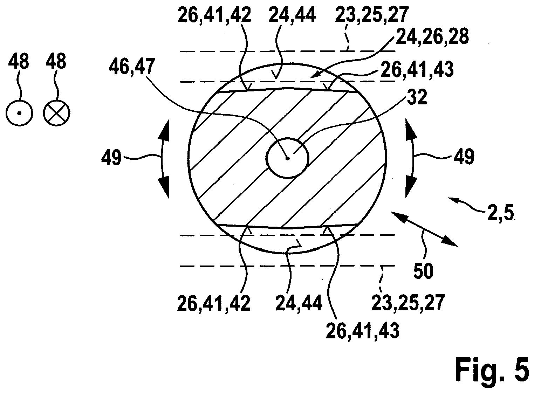

Ein Gewindeschneidfutter 1 ist mit einem Aufnahmeschaft 2 an einem maschinenseitigen Antrieb (nicht dargestellt), insbesondere einer CNC-Werkzeugmaschine, befestigt. An einem Spannmittel 4 ist form- und/oder kraftschlüssig ein Gewindebohrer 6 befestigt zum Einarbeiten eines Gewindes in ein nicht dargestelltes Werkstück. Der Aufnahmeschaft 2 ist mit dem Spannmittel 4 mittels eines Zwischenteils 3 mechanisch gekoppelt und verbunden. Der Aufnahmeschaft 2, das Spannmittel 4 und der Gewindebohrer 6 bilden jeweils Komponenten 5 des Gewindeschneidfutters 1. Der Aufnahmeschaft 2 weist eine erste zentrische Bohrung 31 mit einem größeren Durchmesser auf als eine zweite zentrische Bohrung 32. Ein Außengewinde 20 an dem Aufnahmeschaft 2 dient zur mechanischen Kopplung mit dem maschinenseitigen Antrieb. Ferner ist an der Außenseite des Aufnahmeschafts 2 eine Stufe 30 ausgebildet, welche als Anschlag für das Zwischenteil 3 fungiert. Der Aufnahmeschaft 2 weist wie das Gewindeschneidfutter 1 eine zentrische Längsachse 46 auf, welche zugleich eine Rotationsachse 47 des Gewindeschneidfutters 1 bildet. Eine Axialrichtung 48 ist somit parallel zu der zentrischen Längsachse 46 und der Rotationsachse 47 des Gewindeschneidfutters 1 ausgerichtet. Eine Radialrichtung 50 ist senkrecht zu der zentrischen Längsachse 46 und damit auch der Rotationsachse 47 ausgerichtet. Eine Tangentialrichtung 49 als einer Drehrichtung 49 ist senkrecht zu der Zeichenebene von Fig. 1, 2, 3 und 4 ausgerichtet. An dem Aufnahmeschaft 2 sind zwei Befestigungsbohrungen 29 als Sacklochbohrungen in der Radialrichtung 50 eingearbeitet. Ferner sind außenseitig an dem Aufnahmeschaft 2 zwei Ausnehmungen 28 eingearbeitet. Eine axiale Begrenzung 44 der Ausnehmung 28 bilden ein zweites Axialanschlagelement 24 und eine radiale Begrenzung 41 der Ausnehmung 28 bildet ein zweites Tangentialanschlagelement 26. An einem zu dem Außengewinde 20 zugewandt zu dem maschinenseitigen Antrieb gegenüberliegenden Ende des Aufnahmeschafts 2 ist ein Zentrierstift 21 ausgebildet (Fig. 1). Die Ausnehmung 28 des Aufnahmeschafts 2 weist in der Radialrichtung 50 die radiale Begrenzung 41 auf. Die radiale Begrenzung 41 ist dabei in einen ersten ebenen Abschnitt 42 und in einen zweiten ebenen Abschnitt 43 unterteilt (Fig. 5). In Axialrichtung 48 ist die Ausnehmung 28 von jeweils zwei axialen Begrenzungen 44 begrenzt.

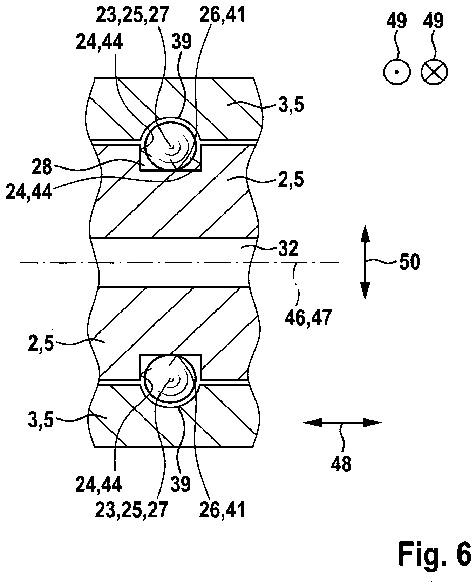

Das Zwischenteil 3 weist eine zentrische Bohrung 37 mit einem konstanten Durchmesser auf. An der Außenseite des Zwischenteils 3 zugewandt zu dem Außengewinde 20 ist ein konisch sich verjüngender Abschnitt 36 ausgebildet. An dem Zwischenteil 3 sind zwei durchgehende Aussparungen 19 ausgebildet, welche in der Radialrichtung 50 fluchten. Die Aussparungen 19 sind von einer Begrenzung 45 des Zwischenteils 3 begrenzt und die Begrenzungen 45 der Aussparungen 19 bilden zweite Auflageelemente 18. Ferner sind an einem hülsenförmigen Abschnitt 22 des Zwischenteils 3 insgesamt vier Befestigungsbohrungen 38 ausgebildet. Jeweils zwei Befestigungsbohrungen 38 fluchten zueinander in der Radialrichtung 50 und in den jeweils zwei fluchtenden Bohrungen 38 ist ein Bolzen 27 angeordnet und befestigt. An einem zu dem Gewindebohrer 6 zugewandten Ende des Zwischenteils 3 ist eine zentrische Zentrierbohrung 40 für den Zentrierstift 21 ausgebildet. Ein Teilbereich 39 der Befestigungsbohrung 38 ragt in die zentrische Bohrung 37 des Zwischenteils 3 hinein, sodass dadurch an einem Bereich der Bolzen 27 einerseits teilweise in dem Teilbereich 39 der Befestigungsbohrung 38 angeordnet ist und zusätzlich teilweise in der Ausnehmung 28 (Fig. 6).

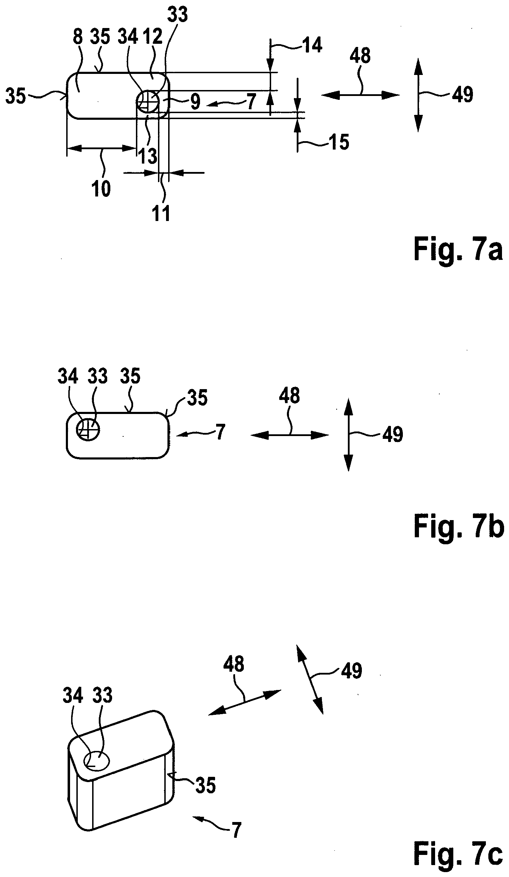

Ein Elastomerelement 7 (Fig. 7a, 7b, 7c) aus Gummi als einem Elastomer, weist eine Bohrung 33 auf, die im Wesentlichen in der Radialrichtung 50, das heißt mit einer Abweichung von weniger als 30°, 20°, 10° oder 5°, zu der Radialrichtung 50 des Gewindeschneidfutters 1 ausgerichtet ist analog zu den Befestigungsbohrungen 29 in dem Aufnahmeschaft 2. Die Bohrungen 33 des Elastomerelements 7 sind von einer Teilaußenseite 34 des Elastomerelements 7 begrenzt. In den zwei Befestigungsbohrungen 29 des Aufnahmeschafts 2 ist jeweils ein Stift 17 aus Metall, insbesondere Stahl, als ein erstes Auflageelement 16 im Wesentlichen ausgerichtet in der Radialrichtung 50 befestigt. Ein Teilbereich des Stifts 17 ragt aus der Befestigungsbohrung 29 heraus und ist in der Bohrung 33 des Elastomerelements 7 angeordnet. Das Gewindeschneidfutter 1 weist zwei Elastomerelemente 7 auf, die jeweils in der Aussparung 19 des Zwischenteils 3 angeordnet sind bei einer Anordnung des Stifts 17 in der Bohrung 33 des Elastomerelements 7. Damit liegt eine Teilaußenseite 35 des Elastomerelements 7 auf der Begrenzung 45 der Aussparung 19 des Zwischenteils 3 auf. Vorzugsweise ist dabei die Ausdehnung des Elastomerelements 7 dahingehend ausgebildet, dass auch ohne Beanspruchung des Gewindeschneidfutters 1 die Teilaußenseite 35 elastisch vorgespannt auf der Begrenzung 45 aufliegt und die Teilaußenseite 34 an der Bohrung 33 elastisch vorgespannt auf dem Stift 17 aufliegt, das heißt, dass stets ein Kontakt zwischen der Teilaußenseite 34 der Bohrung 33 und dem Stift 17 vorhanden ist und der Teilaußenseite 35 des Elastomerelements 7 und der Begrenzung 45 vorhanden ist.

In zwei fluchtenden Befestigungsbohrungen 38 des Zwischenteils 3 ist je ein Bolzen 27 befestigt, welcher ein erstes Tangentialanschlagelement 25 und ein erstes Axialanschlagelement 23 bildet. Je einer der beiden Bolzen 27 ist teilweise in der Ausnehmung 28 angeordnet. In Fig. 5 sind die Bolzen 27 strichliert dargestellt. Ohne eine Beanspruchung des Gewindeschneidfutters 1 mit Kräften weist dabei der Bolzen 27 zu beiden axialen Begrenzungen 44 der Ausnehmung 28 ein Spiel auf und außerdem zu der radialen Begrenzung 41 der Ausnehmung 28. Der Bolzen 27 und die radiale Begrenzung 41 sowie die axiale Begrenzung 44 bilden somit einen axialen Anschlag und einen tangentialen Anschlag zur Begrenzung des abgefederten axialen und tangentialen Spiels an dem Spannmittel 4 und damit auch an dem Gewindebohrer 6. Kommt die Außenseite des Bolzens 27 aus Stahl auf einer der beiden axialen Begrenzungen 44 zum Aufliegen in einer ersten oder zweiten Axialrichtung, ist damit das abgefederte axiale Spiel des Spannmittels 4 begrenzt. In analoger Weise ist das abgefederte tangentiale Spiel des Spannmittels 4 in der Drehrichtung begrenzt, sobald der Bolzen 27 auf der radialen Begrenzung 41, das heißt entweder auf dem ersten ebenen Abschnitt 42 oder dem zweiten ebenen Abschnitt 43 zur Auflage kommt zur Begrenzung des abgefederten axialen Spiels in der ersten oder zweiten Drehrichtung. Aufgrund der ebenen Ausbildung des ersten und zweiten ebenen Abschnitts 42, 43 der radialen Begrenzung 41 liegt der zylinderförmige Bolzen 27 großflächig auf der radialen Begrenzung 41 auf, sodass dadurch keine Spannungsspitzen zwischen dem Bolzen 27 und der radialen Begrenzung 41 des Zwischenteils 3 auftreten können.

Das Elastomerelement 7 ist aus Gummi mit einem konstanten Elastizitätsmodul ausgebildet. In einer ersten Axialrichtung (links von der Bohrung 33 gemäß Fig. 7a) weist das Elastomerelement 7 in dem ersten Ausführungsbeispiel gemäß Fig. 7a einen ersten Axialabschnitt 8 mit einer Ausdehnung 10 auf und in einer zweiten Axialrichtung (rechts von der Bohrung 33 gemäß Fig. 7a) einen zweiten Axialabschnitt 9 mit einer Ausdehnung 11 auf. In der Tangentialrichtung 49 weist das Elastomerelement 7 (Fig. 7a) einen ersten Tangentialabschnitt 12 (über der Bohrung 33 gemäß Fig. 7a) in einer ersten Drehrichtung und einen zweiten Tangentialabschnitt 13 (unter der Bohrung 33 gemäß Fig. 7a) in einer zweiten Drehrichtung auf. Der erste Tangentialabschnitt 12 weist eine Ausdehnung 14 auf und der zweite Tangentialabschnitt 13 weist eine Ausdehnung 15 auf. Die Ausdehnung 10 des ersten Axialabschnitts 8 ist wesentlich größer als die Ausdehnung 11 des zweiten Axialabschnitts 9. Der erste Axialabschnitt 8 dient zur elastischen Abfederung des axialen Spiels in der ersten Axialrichtung und der zweite Axialabschnitt des Elastomerelements 7 dient zur Abfederung des axialen Spiels in der zweiten Axialrichtung. In analoger Weise dient der erste Tangentialabschnitt 12 zur elastischen Abfederung des tangentialen Spiels in einer ersten Drehrichtung und der zweite Tangentialabschnitt 13 zur elastischen Abfederung in einer zweiten Drehrichtung des Gewindeschneidfutters 1. Der erste Tangentialabschnitt 12 ist wesentlich größer in der Ausdehnung 14 als die Ausdehnung 15 des zweiten Tangentialabschnitts 13, sodass dadurch der erste Tangentialabschnitt 12 eine kleinere Federkonstante aufweist als der zweite Tangentialabschnitt 13. Entsprechend weist der erste Axialabschnitt 8 eine kleinere Federkonstante auf als der zweite Axialabschnitt 9. Dabei können die erste und zweite Axialrichtung und die erste und die zweite Drehrichtung beliebig an dem Gewindeschneidfutter 1 definiert werden. Das Elastomerelement 7 in dem ersten Ausführungsbeispiel ist an der Teilaußenseite 35 im Wesentlichen gerade und teilkreisförmig ausgebildet zur Einfügung in die entsprechend komplementär ausgebildete Begrenzung 45.

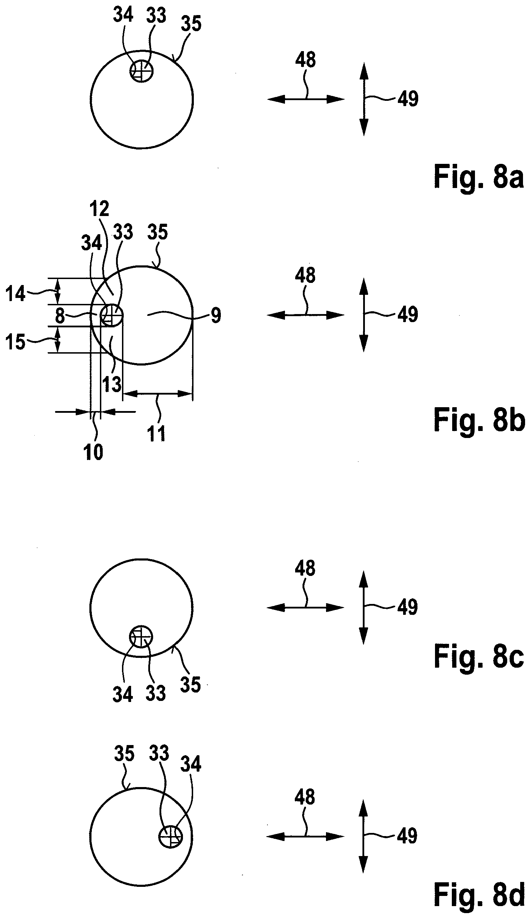

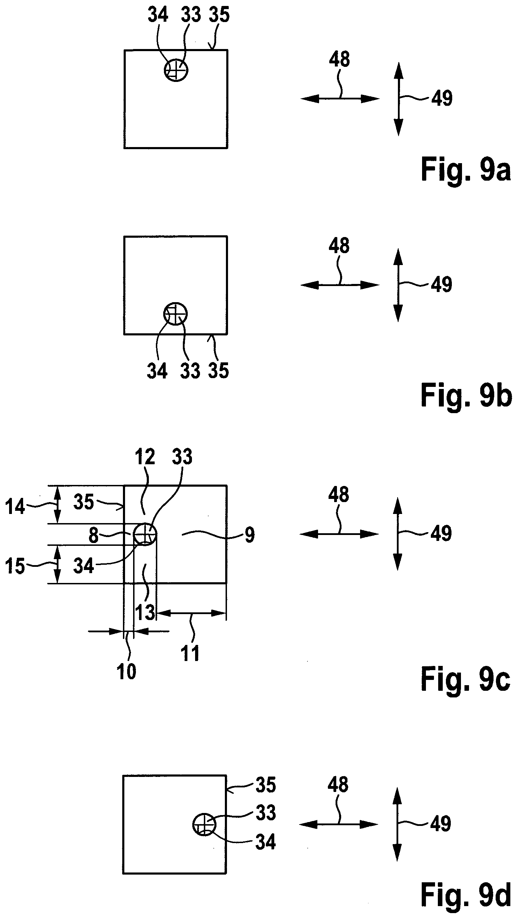

In Fig. 8a bis 8d ist ein zweites Ausführungsbeispiel des Elastomerelementes 7 dargestellt. Die Teilaußenseite 35 des Elastomerelements 7 ist dabei zylindermantelförmig ausgebildet, sodass dadurch das Elastomerelement 7 in einer zylindermantelförmigen Begrenzung 45 (nicht dargestellt) der Aussparung 19 des Zwischenteils 3 in unterschiedlichen Drehpositionen angeordnet werden kann, sodass dadurch mit einem identischen Elastomerelement 7 unterschiedliche Ausdehnungen 10, 11 des ersten und zweiten Axialabschnitts 8, 9 und unterschiedliche Ausdehnungen 14, 15 des ersten und zweiten Tangentialabschnitts 12, 13 erreicht werden können gemäß den Fig. 8a bis 8d. Dies gilt analog für ein drittes Ausführungsbeispiel (Fig. 9a, 9b, 9c, 9d) des Elastomerelementes 7, das an der Teilaußenseite 35 quadratisch ausgebildet ist.

In Fig. 10a bis 10c ist ein viertes Ausführungsbeispiel des Elastomerelements 7 dargestellt. Die Teilaußenseite 35 des Elastomerelements 7 ist dabei im Wesentlichen dreieckförmig ausgebildet und durch eine unterschiedliche Anordnung des identischen Elastomerelements 7 in einer entsprechend komplementär dreieckförmig ausgebildeten Begrenzung 45 der Aussparung 9 können dadurch wieder unterschiedliche Ausdehnungen 10, 11, 14, 15 gemäß den oben beschriebenen Ausführungsbeispielen erreicht werden und dies gilt analog für das fünfte Ausführungsbeispiel des Elastomerelements 7, welches in den Fig. 11a und 11b abgebildet ist.

Insgesamt betrachtet sind mit dem erfindungsgemäßen Gewindeschneidfutter 1 und dem erfindungsgemäßen Verfahren zum Betreiben des Gewindeschneidfutters wesentliche Vorteile verbunden. An dem Gewindeschneidfutter 1 ist ein Gewindebohrer 6 befestigt. Mittels des Gewindebohrers 6 wird in eine Bohrung, insbesondere ein Sacklochbohrung oder eine Durchgangsbohrung, des Werkstückes das Gewinde eingearbeitet. Während des Einarbeitens des Gewindes wird das Gewindeschneidfutter 1 von einem maschinenseitigen Antrieb, insbesondere einer CNC-Werkzeugmaschine, in der Axialrichtung 48 mit einer bestimmten Vorschubgeschwindigkeit bewegt und in der tangentialen Richtung 49 mit einer bestimmten Winkelgeschwindigkeit als einer bestimmten Rotationsgeschwindigkeit simultan bewegt entsprechend der Steigung des Gewindebohrers 6. Aufgrund von Fertigungsungenauigkeiten an der Steigung des Gewindebohrers 6 und des nicht mit absoluter Genauigkeit führbaren Gewindeschneidfutters 1 in der Axialrichtung 48 mit der Vorschubgeschwindigkeit und der Winkelgeschwindigkeit bzw. Rotationsgeschwindigkeit in der Tangentialrichtung 49 bzw. Drehrichtung 49 kommt es zu Abweichungen zwischen der Steigung des Gewindebohrers 6 und der notwendigen Vorschub- und Rotationsgeschwindigkeit des Gewindebohrers 6. Aus diesem Grund ist es insbesondere zur Vermeidung von hohen auftretenden Kräften an dem Gewindeschneidfutter 1 notwendig, in der Axial- und Tangentialrichtung 48, 49 ein axiales und tangentiales Spiel vorzusehen, welches mit dem Elastomerelement 7 elastisch abgefedert ist. Für eine Optimierung des Einarbeitens eines Gewindes mittels des Gewindebohrers 6 ist es dabei notwendig, in der ersten und zweiten Axialrichtung eine unterschiedliche optimierte Federkonstante speziell für das axiale Spiel in der ersten Axialrichtung und der zweiten Axialrichtung vorzusehen, so dass unterschiedliche relative Translationsbewegungen in der ersten und zweiten Axialrichtung 48 zwischen dem Spannmittel 2 mit Gewindebohrer 6 und dem Aufnahmeschaft 2 bei einem identischen Betrag der Druckkraft und Zugkraft an dem Aufnahmeschaft 2 auftreten. Es wird dabei davon ausgegangen, dass die Druckkraft und die Zugkraft an dem Aufnahmeschaft 2 identisch ist zu der Druckkraft und Zugkraft an dem Gewindebohrer 6, d. h. Trägheitskräfte werden nicht berücksichtigt. Dies gilt analog für das tangentiale Spiel speziell in der ersten Drehrichtung und der zweiten Drehrichtung. Aufgrund der konstruktiven Ausbildung des Elastomerelements 7 an der Begrenzung 45 und dem Stift 17 mit unterschiedlichen Ausdehnungen 10, 11 in dem ersten und zweiten Axialabschnitt 8, 9 und unterschiedlichen Ausdehnungen 14, 15 in dem ersten und zweiten Tangentialabschnitt 12, 13 können in einfacher Weise unterschiedliche Federkonstanten in der ersten und zweiten Axialrichtung und in der ersten und zweiten Drehrichtung erreicht werden. Durch eine entsprechende Ausbildung der Geometrie der Begrenzung 45 und der Teilaußenseite 35 des Elastomerelementes 7 können unterschiedliche Federkonstanten in der ersten und zweiten Axialrichtung und in der ersten und zweiten Drehrichtung lediglich durch eine unterschiedliche Drehposition des Elastomerelements 7 in der Begrenzung 45 der Aussparung 19 in vorteilhafter Weise erreicht werden. Das Gewindeschneidfutter 1 ist damit in der Herstellung preiswert, im Betrieb zuverlässig und kann durch die konstruktive Ausbildung einfach unterschiedliche Federkonstanten in den Axial- und Drehrichtungen aufweisen für eine Optimierung des Einschneidens eines Gewindes mit dem Gewindebohrer 6.

## Patentansprüche

1. Gewindeschneidfutter (1) zum Synchron-Gewindeschneiden, umfassend
- einen Aufnahmeschaft (2) als Komponente (5) des Gewindeschneidfutters (1) zum maschinenseitigen Antrieb,
- ein Zwischenteil (3) als Komponente (5) des Gewindeschneidfutters (1),
- ein Spannmittel (4) als Komponente (5) des Gewindeschneidfutters (1) zur Fixierung eines Gewindebohrers (6),
- wobei mit dem Zwischenteil (3) der Aufnahmeschaft (2) mit dem Spannmittel (4) verbunden ist,
- ein Elastomerelement (7) zur Abfederung eines axialen Spiels in Axialrichtung (48) des Gewindeschneidfutters (1) und eines tangentialen Spiels in Drehrichtung (49) des Gewindeschneidfutters (1) zwischen dem Aufnahmeschaft (2) und dem Spannmittel (4) aufgrund der elastischen Eigenschaften des Elastomerelementes (6),
- ein erstes Auflageelement (16) zum Aufbringen einer Kraft auf das Elastomerelement (7) und das erstes Auflageelement (16) auf dem Elastomerelement (7) aufliegt,
- ein zweites Auflageelement (18) zum Aufbringen einer Kraft auf das Elastomerelement (7) und das zweite Auflageelement (18) auf dem Elastomerelement (7) aufliegt,
**dadurch gekennzeichnet, dass**
das Elastomerelement (7) mit einem Elastizitätsmodul zwischen 0,05 und 10 GPa in einer ersten Axialrichtung (48) eine größere Federkonstante aufweist als in einer zweiten Axialrichtung (48) und die erste und zweite Axialrichtung (48) entgegengesetzt zueinander ausgerichtet sind
und
das Elastomerelement (7) mit einem Elastizitätsmodul zwischen 0,05 und 10 GPa in einer ersten Drehrichtung (49) eine größere Federkonstante aufweist als in einer zweiten Drehrichtung (49) und die erste und zweite Drehrichtung (49) entgegengesetzt zueinander ausgerichtet sind
und
die Federkonstante als Proportionalitätsfaktor des Elastomerelementes (7) gemäß dem Hookeschen Gesetz bestimmt ist.

2. Gewindeschneidfutter nach Anspruch 1,
**dadurch gekennzeichnet, dass**
das Gewindeschneidfutter (1), insbesondere das Elastomerelement (7) und das erste und zweite Auflageelement (16, 18), dahingehend ausgebildet ist, dass das erste und zweite Auflageelement (16, 18) auf dem Elastomerelement (7) zum Aufbringen einer Druckkraft auf dem Elastomerelement (7) aufliegt zur Abfederung des axialen und/oder tangentialen Spiels.

3. Gewindeschneidfutter nach Anspruch 1 oder 2,
**dadurch gekennzeichnet, dass**
das Elastomerelement (7) zwischen dem ersten und zweiten Auflageelement (16, 18) in Axialrichtung (48) in einen ersten Axialabschnitt (8) und einen zweiten Axialabschnitt (9) unterteilt ist.

4. Gewindeschneidfutter nach Anspruch 3,
**dadurch gekennzeichnet, dass**
der erste Axialabschnitt (8) in Axialrichtung (48) eine kleinere Ausdehnung (10, 11) aufweist als der zweite Axialabschnitt (9) in Axialrichtung (48), so dass das Elastomerelement (7) in der ersten Axialrichtung (48) die größere Federkonstante aufweist als in der zweiten Axialrichtung (48).

5. Gewindeschneidfutter nach Anspruch 3 oder 4,
**dadurch gekennzeichnet, dass**
der erste Axialabschnitt (8) in Axialrichtung (48) ein größeres Elastizitätsmodul aufweist als der zweite Axialabschnitt (9) in Axialrichtung (48), so dass das Elastomerelement (7) in der ersten Axialrichtung (48) die größere Federkonstante aufweist als in der zweiten Axialrichtung (48).

6. Gewindeschneidfutter nach einem oder mehreren der vorhergehenden Ansprüche,
**dadurch gekennzeichnet, dass**
das Elastomerelement (7) zwischen dem ersten und zweiten Auflageelement (16, 18) in Drehrichtung (49) in einen ersten Tangentialabschnitt (12) und einen zweiten Tangentialabschnitt (13) unterteilt ist.

7. Gewindeschneidfutter nach Anspruch 6,
**dadurch gekennzeichnet, dass**
der erste Tangentialabschnitt (12) in Tangentialrichtung (49) eine kleinere Ausdehnung (14, 15) aufweist als der zweite Tangentialabschnitt (13) in Tangentialrichtung (49), so dass das Elastomerelement (7) in der ersten Tangentialrichtung (49) die größere Federkonstante aufweist als in der zweiten Tangentialrichtung (49).

8. Gewindeschneidfutter nach Anspruch 6 oder 7,
**dadurch gekennzeichnet, dass**
der erste Tangentialabschnitt (12) in Tangentialrichtung (49) ein größeres Elastizitätsmodul aufweist als der zweite Tangentialabschnitt (13) in Tangentialrichtung (49), so dass das Elastomerelement (7) in der ersten Tangentialrichtung (49) die größere Federkonstante aufweist als in der zweiten Tangentialrichtung (49).

9. Verfahren zum Betreiben eines Gewindeschneidfutter (1) zum Synchron-Gewindeschneiden mit den Schritten:
- formschlüssiges und/oder kraftschlüssiges Fixieren eines Gewindebohrers (6) an einem Spannmittel (4) als Komponente (5) des Gewindeschneidfutters (1),
- Aufbringen einer Druckkraft in einer ersten Axialrichtung (48) und eines Drehmomentes in einer ersten Drehrichtung (49) auf einen Aufnahmeschaft (2) des Gewindeschneidfutters (1), so dass der Gewindebohrer (6) in eine Bohrung eines Werkstückes eingeführt wird und während des Einführens in die Bohrung der Gewindebohrer (6) aufgrund der auf den Aufnahmeschaft (2) aufgebrachten Druckkraft von dem Gewindebohrer (6) eine Translationsbewegung in der ersten Axialrichtung (48) in die Bohrung hinein ausgeführt wird und aufgrund des auf den Aufnahmeschaft (2) aufgebrachten Drehmomentes von dem Gewindebohrer (6) eine Rotationsbewegung in der ersten Drehrichtung (49) in der Bohrung ausgeführt wird, so dass von dem Gewindebohrer (6) in die Bohrung ein Gewinde eingearbeitet wird,
- Aufbringen einer Zugkraft in einer zweiten Axialrichtung (48) und eines Drehmomentes in einer zweiten Drehrichtung (49) auf den Aufnahmeschaft (2) des Gewindeschneidfutters (1), wobei die erste und zweite Axialrichtung (48) entgegengesetzt zueinander ausgerichtet sind und die erste und zweite Drehrichtung (49) entgegengesetzt zueinander ausgerichtet sind, so dass der Gewindebohrer (6) aus der Bohrung des Werkstückes heraus bewegt wird und während des Herausbewegens aus der Bohrung der Gewindebohrer (6) aufgrund der auf den Aufnahmeschaft (2) aufgebrachten Zugkraft der Gewindebohrer (6) mit einer Translationsbewegung in der zweiten Axialrichtung (48) aus der Bohrung heraus bewegt wird und aufgrund des auf den Aufnahmeschaft (2) aufgebrachten Drehmomentes von dem Gewindebohrer (6) eine Rotationsbewegung in der zweiten Drehrichtung (49) in der Bohrung ausgeführt wird,
- während der Translationsbewegung und Rotationsbewegung des Gewindebohrers (6) in der Bohrung des Werkstückes mit einem elastischen Elastomerelement (7) eine Abfederung eines axialen Spiels in der ersten und zweiten Axialrichtung (48) ausgeführt wird, so dass eine relative Translationsbewegung in der ersten und zweiten Axialrichtung (48) zwischen dem Spannmittel (4) mit Gewindebohrer (6) und dem Aufnahmeschaft (2) ausgeführt wird,
- während der Translationsbewegung und Rotationsbewegung des Gewindebohrers (6) in der Bohrung des Werkstückes mit dem elastischen Elastomerelement (7) eine Abfederung eines tangentialen Spiels in der ersten und zweiten Drehrichtung (49) ausgeführt wird, so dass eine relative Rotationsbewegung in der ersten und zweiten Drehrichtung (49) zwischen dem Spannmittel (4) mit Gewindebohrer (6) und dem Aufnahmeschaft (2) ausgeführt wird,
**dadurch gekennzeichnet, dass**
das Elastomerelement (7) aus einem Werkstoff mit einem Elastizitätsmodul zwischen 0,05 und 10 GPa in der ersten Axialrichtung (48) eine um wenigstens 20% größere Federkonstante aufweist als in der zweiten Axialrichtung (48), so dass bei einer auf den Aufnahmeschaft (2) in der ersten Axialrichtung (48) wirkenden bestimmten Druckkraft und bei einer auf den Aufnahmeschaft (2) in der zweiten Axialrichtung (48) wirkenden bestimmten Zugkraft bei einem identischen Betrag der bestimmten Druckkraft und Zugkraft die relative Translationsbewegung in der ersten Axialrichtung (48) zwischen dem Spannmittel (4) mit Gewindebohrer (6) und dem Aufnahmeschaft (2) um wenigstens 20% kleiner ausgeführt wird als in der zweiten Axialrichtung (48)
oder
das Elastomerelement (7) aus einem Werkstoff mit einem Elastizitätsmodul zwischen 0,05 und 10 GPa in der ersten Axialrichtung (48) eine um wenigstens 20% kleinere Federkonstante aufweist als in der zweiten Axialrichtung (48), so dass bei einer auf den Aufnahmeschaft (2) in der ersten Axialrichtung (48) wirkenden bestimmten Druckkraft und bei einer auf den Aufnahmeschaft (2) in der zweiten Axialrichtung (48) wirkenden bestimmten Zugkraft bei einem identischen Betrag der bestimmten Druckkraft und Zugkraft die relative Translationsbewegung in der ersten Axialrichtung (48) zwischen dem Spannmittel (4) mit Gewindebohrer (6) und dem Aufnahmeschaft (2) um wenigstens 20% größer ausgeführt wird als in der ersten Axialrichtung (48)
und
das Elastomerelement (7) aus einem Werkstoff mit einem Elastizitätsmodul zwischen 0,05 und 10 GPa in der ersten Drehrichtung (49) eine um wenigstens 20% größere Federkonstante aufweist als in der zweiten Drehrichtung (49), so dass bei einer auf den Aufnahmeschaft (2) in der ersten Drehrichtung (49) wirkenden bestimmten Drehmoment und bei einer auf den Aufnahmeschaft (2) in der zweiten Drehrichtung (49) wirkenden bestimmten Drehmoment bei einem identischen Betrag des bestimmten Drehmomentes die relative Rotationsbewegung in der ersten Drehrichtung (49) zwischen dem Spannmittel (4) mit Gewindebohrer (6) und dem Aufnahmeschaft (2) um wenigstens 20% kleiner ausgeführt wird als in der zweiten Drehrichtung (49)
oder
das Elastomerelement (7) aus einem Werkstoff mit einem Elastizitätsmodul zwischen 0,05 und 10 GPa in der ersten Drehrichtung (49) eine um wenigstens 20% kleinere Federkonstante aufweist als in der zweiten Drehrichtung (49), so dass bei einer auf den Aufnahmeschaft (2) in der ersten Drehrichtung (49) wirkenden bestimmten Drehmoment und bei einer auf den Aufnahmeschaft (2) in der zweiten Drehrichtung (49) wirkenden bestimmten Drehmoment bei einem identischen Betrag des bestimmten Drehmomentes die relative Rotationsbewegung in der ersten Drehrichtung (49) zwischen dem Spannmittel (4) mit Gewindebohrer (6) und dem Aufnahmeschaft (2) um wenigstens 20% größer ausgeführt wird als in der zweiten Drehrichtung (49).

10. Verfahren nach Anspruch 9,
**dadurch gekennzeichnet, dass**
von der relativen Translationsbewegung in der ersten und zweiten Axialrichtung (48) zwischen dem Spannmittel (4) mit Gewindebohrer (6) und dem Aufnahmeschaft (2) eine, insbesondere ausschließliche, Druckkraft in dem Elastomerelement (7) verursacht wird, so dass von der Druckkraft eine, insbesondere ausschließliche, Stauchung des Elastomerelementes (7), insbesondere wenigstens eines Axialabschnittes (8, 9) des Elastomerelementes (7), verursacht wird.

11. Verfahren nach Anspruch 9 oder 10,
**dadurch gekennzeichnet, dass**
von der relativen Rotationsbewegung in der ersten und zweiten Axialrichtung (48) zwischen dem Spannmittel (4) mit Gewindebohrer (6) und dem Aufnahmeschaft (2) eine, insbesondere ausschließliche, Druckkraft in dem Elastomerelement (7) verursacht wird, so dass von der Druckkraft eine, insbesondere ausschließliche, Stauchung des Elastomerelementes (7), insbesondere wenigstens eines Tangentialabschnittes (12, 13) des Elastomerelementes (7), verursacht wird.

12. Verfahren nach einem oder mehreren der Ansprüche 9 bis 11,
**dadurch gekennzeichnet, dass**
die auf den Aufnahmeschaft (2) in der ersten Axialrichtung (48) wirkende Druckkraft und die auf den Aufnahmeschaft (2) in der zweiten Axialrichtung (48) wirkenden bestimmten Zugkraft eine auf das Elastomerelement (7) wirkende Verformungskraft verursacht und diese Verformungskraft, insbesondere ausschließlich, in einem radialen Abstand zu einer Rotationsachse (47) des Gewindeschneidfutters (1) auf das Elastomerelement (7) aufgebracht wird.

13. Verfahren nach einem oder mehreren der Ansprüche 9 bis 12,
**dadurch gekennzeichnet, dass**
das auf den Aufnahmeschaft (2) in der ersten Drehrichtung (49) wirkende Drehmoment und das auf den Aufnahmeschaft (2) in der zweiten Drehrichtung (49) wirkenden bestimmten Drehmoment eine auf das Elastomerelement (7) wirkende Verformungskraft verursacht und diese Verformungskraft, insbesondere ausschließlich, in einem radialen Abstand zu einer Rotationsachse (47) des Gewindeschneidfutters (1) auf das Elastomerelement (7) aufgebracht wird.

14. Verfahren nach einem oder mehreren der Ansprüche 9 bis 13,
**dadurch gekennzeichnet, dass**
das innere radiale Ende des Elastomerelementes (7) einen radialen Abstand zu der Rotationsachse (47) des Gewindeschneidfutters (1) aufweist und in Tangentialrichtung (49) das Elastomerelement ausschließlich an einem tangentialen Teilbereich ausgebildet ist, so dass das Elastomerelement (7) ausschließlich in einem radialen Abstand zu der Rotationsachse (47) und ausschließlich an dem tangentialen Teilbereich von der auf das Elastomerelement (7) wirkenden Verformungskraft verformt wird.

15. Verfahren nach einem oder mehreren der Ansprüche 9 bis 14,
**dadurch gekennzeichnet, dass**
wenigstens ein Elastomerelement (7) ausgetauscht indem das wenigstens eine Elastomerelement (7) aus je einer Aussparung (19), insbesondere ausschließlich, im Wesentlichen in Radialrichtung (50) nach außen aus der je einen Aussparung (19) heraus bewegt wird und anschließend wenigstens ein anderes Elastomerelement (7) in die je eine Aussparung (19), insbesondere ausschließlich, im Wesentlichen in Radialrichtung (50) nach innen hinein bewegt wird, so dass vorzugsweise anschließend das Gewindeschneidfutter (1) in der ersten und/oder zweiten Axialrichtung (48) eine andere Federkonstante aufweist und/oder in der ersten und/oder zweiten Drehrichtung (49) eine andere Federkonstante aufweist

## Claims

1. Thread-cutting chuck (1) for synchronous thread cutting, comprising
- a receiving shank (2) as a component (5) of the thread-cutting chuck (1), which is driven by a machine,
- an intermediate part (3) as component (5) of the thread-cutting chuck (1),
- a clamping means (4) as a component (5) of the thread-cutting chuck (1) for fixing a tap (6),
- whereby with the intermediate part (3) the receiving shank (2) is connected to the clamping means (4),
- an elastomer element (7) for spring suspension of an axial clearance in the axial direction (48) of the thread-cutting chuck (1) and a tangential clearance in the direction of rotation (49) of the thread-cutting chuck (1) between the receiving shank (2) and the clamping means (4) due to the elastic properties of the elastomer element (6),
- a first support element (16) for applying a force to the elastomer element (7) and the first support element (16) rests on the elastomer element (7),
- a second support element (18) for applying a force to the elastomer element (7) and the second support element (18) rests on the elastomer element (7),
**characterized in that**,
the elastomer element (7) with a modulus of elasticity between 0.05 and 10 GPa has a greater spring constant in a first axial direction (48) than in a second axial direction (48) and the first and second axial direction (48) are aligned opposite to each other
and
the elastomer element (7) with a modulus of elasticity between 0.05 and 10 GPa in a first direction of rotation (49) has a greater spring constant than in a second direction of rotation (49) and the first and second direction of rotation (49) are aligned opposite to each other and
the spring constant is determined as the proportionality factor of the elastomer element (7) according to Hooke's law.

2. Thread-cutting chuck according to claim 1,
**characterized in that**
the thread-cutting chuck (1), in particular the elastomer element (7) and the first and second support elements (16, 18), are designed in such a way that the first and second support elements (16, 18) rest on the elastomer element (7) for applying a compressive force to the elastomer element (7) for spring suspension of the axial and/or tangential clearance.

3. Thread-cutting chuck according to claim 1 or 2,
**characterized in that**
the elastomer element (7) is divided into a first axial section (8) and a second axial section (9) between the first and second support elements (16, 18) in the axial direction (48).

4. Thread-cutting chuck according to claim 3,
**characterized in that**
the first axial section (8) in the axial direction (48) has a smaller extent (10, 11) than the second axial section (9) in the axial direction (48), so that the elastomer element (7) has the greater spring constant in the first axial direction (48) than in the second axial direction (48).

5. Thread-cutting chuck according to claim 3 or 4,
**characterized in that**
the first axial section (8) in the axial direction (48) has a greater modulus of elasticity than the second axial section (9) in the axial direction (48), so that the elastomer element (7) has the greater spring constant in the first axial direction (48) than in the second axial direction (48).

6. Thread-cutting chuck according to one or more of the preceding claims,
**characterized in that**
the elastomer element (7) is divided into a first tangential section (12) and a second tangential section (13) between the first and second support elements (16, 18) in the direction of rotation (49).

7. Thread-cutting chuck according to claim 6,
**characterized in that**
the first tangential section (12) in the tangential direction (49) has a smaller extent (14, 15) than the second tangential section (13) in the tangential direction (49), so that the elastomer element (7) has the greater spring constant in the first tangential direction (49) than in the second tangential direction (49).

8. Thread-cutting chuck according to claim 6 or 7,
**characterized in that**
the first tangential section (12) in the tangential direction (49) has a greater modulus of elasticity than the second tangential section (13) in the tangential direction (49), so that the elastomer element (7) has the greater spring constant in the first tangential direction (49) than in the second tangential direction (49).

9. Method for operating a thread-cutting chuck (1) for synchronous thread cutting with the steps:
- form-fit and/or force-fit fixation of a tap (6) to a clamping means (4) as a component (5) of the thread-cutting chuck (1),
- application of a compressive force in a first axial direction (48) and a torque in a first direction of rotation (49) to a receiving shank (2) of the thread-cutting chuck (1), so that the tap (6) is inserted into a bore of a workpiece and, during the insertion into the bore of the tap (6), a translational movement in the first axial direction (48) into the bore is performed by the tap (6) due to the compressive force applied to the receiving shank (2) and, due to the torque applied to the receiving shank (2), the tap (6) performs a rotational movement in the first direction of rotation (49) in the bore, so that a thread is worked into the bore by the tap (6),
- application of a tensile force in a second axial direction (48) and a torque in a second direction of rotation (49) to the receiving shank (2) of the thread-cutting chuck (1), whereby the first and second axial direction (48) are aligned opposite to each other and the first and second direction of rotation (49) are aligned opposite to each other, so that the tap (6) is moved out of the bore of the workpiece and during the movement out of the bore, due to the tensile force applied to the receiving shank (2), the tap (6) is moved out of the bore with a translational movement in the second axial direction (48) and, due to the torque applied to the receiving shank (2), the tap (6) performs a rotational movement in the second direction of rotation (49) in the bore,
- during the translational movement and rotational movement of the tap (6) in the bore of the workpiece with an elastic elastomer element (7), a spring suspension of an axial clearance is carried out in the first and second axial direction (48), so that a relative translational movement is carried out in the first and second axial direction (48) between the clamping means (4) with tap (6) and the receiving shank (2),
- during the translational movement and rotational movement of the tap (6) in the bore of the workpiece with the elastic elastomer element (7), a spring suspension of a tangential clearance is carried out in the first and second direction of rotation (49), so that a relative rotational movement is carried out in the first and second direction of rotation (49) between the clamping means (4) with tap (6) and the receiving shank (2),
**characterized in that**
the elastomer element (7) made of a material with a modulus of elasticity between 0.05 and 10 GPa has a spring constant at least 20% greater in the first axial direction (48) than in the second axial direction (48), so that with a certain compressive force applied on the receiving shank (2) in the first axial direction (48) and with a certain tensile force applied on the receiving shank (2) in the second axial direction (48), with an identical absolute value of the determined certain force and tensile force, the relative translational movement in the first axial direction (48) between the clamping means (4) with tap (6) and the receiving shank (2) is at least 20% smaller than in the second axial direction (48)
or
the elastomer element (7) made of a material with a modulus of elasticity between 0.05 and 10 GPa has a spring constant at least 20% smaller in the first axial direction (48) than in the second axial direction (48), so that with a certain compressive force applied on the receiving shank (2) in the first axial direction (48) and with a certain tensile force applied on the receiving shank (2) in the second axial direction (48), with an identical absolute value of the certain compressive force and tensile force, the relative translational movement in the first axial direction (48) between the clamping means (4) with tap (6) and the receiving shank (2) is at least 20% greater than in the second axial direction (48)
and
the elastomer element (7) made of a material with a modulus of elasticity between 0,05 and 10 GPa has a spring constant at least 20% greater in the first direction of rotation (49) than in the second direction of rotation (49), so with a certain torque applied on the receiving shank (2) in the first direction of rotation (49) and with a certain torque applied on the receiving shank (2) in the second direction of rotation (49), with an identical absolute value of the certain torque, the relative rotational movement in the first direction of rotation (49) between the clamping means (4) with tap (6) and the receiving shank (2) is at least 20% smaller than in the second direction of rotation (49)
or
the elastomer element (7) made of a material with a modulus of elasticity between 0,05 and 10 GPa has a spring constant at least 20% smaller in the first direction of rotation (49) than in the second direction of rotation (49), so with a certain torque applied on the receiving shank (2) in the first direction of rotation (49) and with a certain torque applied on the receiving shank (2) in the second direction of rotation (49), with an identical absolute value of the certain torque, the relative rotational movement in the first direction of rotation (49) between the clamping means (4) with tap (6) and the receiving shank (2) is at least 20% greater than in the second direction of rotation (49).

10. Method according to claim 9,
**characterized in that**
the relative translational movement in the first and second axial direction (48) between the clamping means (4) with tap (6) and the receiving shank (2) causes a, in particular exclusive, compressive force in the elastomer element (7), so that the compressive force results in a, in particular exclusively, deformation of compression of the elastomer element (7), in particular at least one axial section (8, 9) of the elastomer element (7).

11. Method according to claim 9 or 10,
**characterized in that**
the relative rotational motion in the first and second axial direction (48) between the clamping means (6) with tap (6) and the receiving shank (2) causes a, in particular exclusive, compressive force in the elastomer element (7), so that the compressive force results in a, in particular exclusively, deformation of compression of the elastomer element (7), in particular at least one tangential section (12, 13) of the elastomer element (7).

12. Method according to one or more of claims 9 to 11,
**characterized in that**
the compressive force applied on the receiving shank (2) in the first axial direction (48) and the certain tensile force applied on the receiving shank (2) in the second axial direction (48) causes a deformation force applied on the elastomer element (7) and this deformation force, in particular exclusively, at a radial distance from an axis of rotation (47) of the thread-cutting chuck (1) is applied to the elastomer element (7).

13. Method according to one or more of claims 9 to 12,
**characterized in that**
the torque applied on the receiving shank (2) in the first direction of rotation (49) and the certain torque applied on the receiving shank (2) in the second direction of rotation (49) causes a deformation force applied on the elastomer element (7) and this deformation force, in particular exclusively, at a radial distance from an axis of rotation (47) of the thread-cutting chuck (1) is applied to the elastomer element (7).

14. Method according to one or more of claims 9 to 13,
**characterized in that**
the inner radial end of the elastomer element (7) has a radial distance to the axis of rotation (47) of the thread-cutting chuck (1) and in the tangential direction (49) the elastomer element is designed exclusively on a tangential subarea, so that the elastomer element (7) exclusively at a radial distance from the axis of rotation (47) and exclusively at the tangential subarea is deformed by the deformation force applied to the elastomer element (7).

15. Method according to one or more of claims 9 to 14,
**characterized in that**
at least one elastomer element (7) is replaced by moving at least one elastomer element (7) out of each recess (19), in particular exclusively, in the main in the radial direction (50) outwards from each recess (19) and then at least one other elastomer element (7) is moved inwards into each recess (19), in particular exclusively, in the main in the radial direction (50), so that preferably afterwards the thread-cutting chuck (1) has a different spring constant in the first and/or second axial direction (48) and/or has a different spring constant in the first and/or second direction of rotation (49).

## Revendications

1. Mandrin de taraudage (1) pour le taraudage synchrone, comprenant
- une tige d'emmanchement (2) comme composant (5) du mandrin de taraudage (1) pour l'entraînement côté machine,
- une pièce intermédiaire (3) comme composant (5) du mandrin de taraudage (1),
- un moyen de serrage (4) comme composant (5) du mandrin de taraudage (1) pour la fixation d'un taraud (6),
- la tige d'emmanchement (2) étant liée au moyen de serrage (4) au moyen de la pièce intermédiaire (3),
- un élément en élastomère (7) pour l'amortissement d'un jeu axial dans la direction axiale (48) du mandrin de taraudage (1) et d'un jeu tangentiel dans la direction de rotation (49) du mandrin de taraudage (1) entre la tige d'emmanchement (2) et le moyen de serrage (4) en raison des propriétés élastiques de l'élément en élastomère (6),
- un premier élément d'appui (16) pour l'application d'une force sur l'élément en élastomère (7) et le premier élément d'appui (16) étant en appui sur l'élément en élastomère (7),
- un second élément d'appui (18) pour l'application d'une force sur l'élément en élastomère (7) et le second élément d'appui (18) étant en appui sur l'élément en élastomère (7),
**caractérisé en ce que**
l'élément en élastomère (7) comportant un module d'élasticité compris entre 0,05 et 10 GPa présente une constante d'élasticité supérieure dans une première direction axiale (48) que dans une seconde direction axiale (48) et la première et la seconde direction axiale (48) sont orientées opposées l'une à l'autre
et
l'élément en élastomère (7) comportant un module d'élasticité compris entre 0,05 et 10 GPa présente une constante d'élasticité supérieure dans une première direction de rotation (49) que dans une seconde direction de rotation (49) et la première et la seconde direction de rotation (49) sont orientées opposées l'une à l'autre
et
la constante d'élasticité est déterminée en tant que facteur de proportionnalité de l'élément en élastomère (7) selon la loi de Hooke.

2. Mandrin de taraudage selon la revendication 1,
**caractérisé en ce que**
le mandrin de taraudage (1), en particulier l'élément en élastomère (7) et le premier et le second élément d'appui (16, 18), est conçu de manière que le premier et le second élément d'appui (16, 18) sont en appui sur l'élément en élastomère (7) pour l'application d'une force de pression sur l'élément en élastomère (7) pour l'amortissement du jeu axial et/ou tangentiel.

3. Mandrin de taraudage selon la revendication 1 ou 2,
**caractérisé en ce que**
l'élément en élastomère (7) est divisé dans la direction axiale (48) entre le premier et le second élément d'appui (16, 18) en une première section axiale (8) et une seconde section axiale (9).

4. Mandrin de taraudage selon la revendication 3,
**caractérisé en ce que**
la première section axiale (8) présente dans la direction axiale (48) une extension (10, 11) inférieure à celle de la seconde section axiale (9) dans la direction axiale (48), de sorte que l'élément en élastomère (7) présente la constante d'élasticité supérieure dans la première direction axiale (48) que dans la seconde direction axiale (48).

5. Mandrin de taraudage selon la revendication 3 ou 4,
**caractérisé en ce que**
la première section axiale (8) présente dans la direction axiale (48) un module d'élasticité supérieur à celui de la seconde section axiale (9) dans la direction axiale (48), de sorte que l'élément en élastomère (7) présente la constante d'élasticité supérieure dans la première direction axiale (48)que dans la seconde direction axiale (48).

6. Mandrin de taraudage selon une ou plusieurs des revendications précédentes,
**caractérisé en ce que**
l'élément en élastomère (7) est divisé dans la direction de rotation (49) entre le premier et le second élément d'appui (16, 18) en une première section tangentielle (12) et une seconde section tangentielle (13).

7. Mandrin de taraudage selon la revendication 6,
**caractérisé en ce que**
la première section tangentielle (12) présente dans la direction tangentielle (49) une extension (14, 15) inférieure à celle de la seconde section tangentielle (13) dans la direction tangentielle (49), de sorte que l'élément en élastomère (7) présente la constante d'élasticité supérieure dans la première direction tangentielle (49) que dans la seconde direction tangentielle (49).

8. Mandrin de taraudage selon la revendication 6 ou 7,
**caractérisé en ce que**
la première section tangentielle (12) présente dans la direction tangentielle (49) un module d'élasticité supérieur à celui de la seconde section tangentielle (13) dans la direction tangentielle (49), de sorte que l'élément en élastomère (7) présente la constante d'élasticité supérieure dans la première direction tangentielle (49) que dans la deuxième direction tangentielle (49).

9. Procédé pour faire fonctionner un mandrin de taraudage (1) pour un taraudage synchrone comprenant les étapes :
- de fixation par complémentarité de forme et/ou par force d'adhérence d'un taraud (6) à un moyen de serrage (4) comme composant (5) du mandrin de taraudage (1),
- d'application d'une force de pression dans une première direction axiale (48) et d'un couple dans une première direction de rotation (49) sur une tige d'emmanchement (2) du mandrin de taraudage (1), de sorte que le taraud (6) est introduit dans un alésage d'une pièce à usiner et pendant l'introduction du taraud (6) dans l'alésage le taraud (6) réalise en raison de la force de pression appliquée sur la tige d'emmanchement (2) un mouvement de translation dans la première direction axiale (48) vers l'intérieur de l'alésage et le taraud (6) réalise en raison du couple appliqué sur la tige d'emmanchement (2) un mouvement de rotation dans la première direction de rotation (49) vers l'intérieur de l'alésage, de sorte qu'un filetage est incorporé dans l'alésage par le taraud (6),
- d'application d'une force de traction dans une seconde direction axiale (48) et d'un couple dans une seconde direction de rotation (49) sur la tige d'emmanchement (2) du mandrin de taraudage (1), la première et la seconde direction axiale (48) étant orientées opposées l'une à l'autre et la première et la seconde direction de rotation (49) étant orientées opposées l'une à l'autre, de sorte que le taraud (6) est déplacé hors de l'alésage de la pièce à usiner et pendant le déplacement hors de l'alésage du taraud (6), le taraud (6) est déplacé en raison de la force de traction appliquée sur la tige d'emmanchement (2) hors de l'alésage dans un mouvement de translation dans la seconde direction axiale (48) et le taraud (6) réalise en raison du couple appliqué sur la tige d'emmanchement (2) un mouvement de rotation dans la seconde direction de rotation (49) dans l'alésage,
- pendant le mouvement de translation et le mouvement de rotation du taraud (6) dans l'alésage de la pièce à usiner un amortissement d'un jeu axial dans la première et la seconde direction axiale (48) est réalisé au moyen d'un élément en élastomère (7) élastique, de sorte qu'un mouvement de translation relatif dans la première et la seconde direction axiale (48) est réalisé entre le moyen de serrage (4) comportant le taraud (6) et la tige d'emmanchement (2),
- pendant le mouvement de translation et le mouvement de rotation du taraud (6) dans l'alésage de la pièce à usiner un amortissement d'un jeu tangentiel dans la première et la seconde direction de rotation (49) est réalisé au moyen d'un élément en élastomère (7) élastique, de sorte qu'un mouvement de rotation relatif dans la première et la seconde direction de rotation (49) est réalisé entre le moyen de serrage (4) comportant le taraud (6) et la tige d'emmanchement (2),
**caractérisé en ce que**
l'élément en élastomère (7) composé d'un matériau présentant un module d'élasticité compris entre 0,05 et 10 GPa présente dans la première direction axiale (48) une constante d'élasticité d'au moins 20 % supérieure à celle dans la seconde direction axiale (48), de sorte dans le cas d'une force de pression définie agissant dans la première direction axiale (48) sur la tige d'emmanchement (2) et dans le cas d'une force de traction définie agissant dans la seconde direction axiale (48) sur la tige d'emmanchement (2), dans le cas d'une valeur absolue identique de la force de pression et de la force de traction définies le mouvement de translation relatif dans la première direction axiale (48) entre le moyen de serrage (4) comportant le taraud (6) et la tige d'emmanchement (2) est réalisé d'au moins 20 % plus petit que dans la seconde direction axiale (48)
ou
l'élément en élastomère (7) composé d'un matériau présentant un module d'élasticité compris entre 0,05 et 10 GPa présente dans la première direction axiale (48) une constante d'élasticité d'au moins 20 % inférieure à celle dans la seconde direction axiale (48), de sorte dans le cas d'une force de pression définie agissant dans la première direction axiale (48) sur la tige d'emmanchement (2) et dans le cas d'une force de traction définie agissant dans la seconde direction axiale (48) sur la tige d'emmanchement (2), dans le cas d'une valeur absolue identique de la force de pression et de la force de traction définies le mouvement de translation relatif dans la première direction axiale (48) entre le moyen de serrage (4) comportant le taraud (6) et la tige d'emmanchement (2) est réalisé d'au moins 20 % plus grand que dans la première direction axiale (48)
et
l'élément en élastomère (7) composé d'un matériau présentant un module d'élasticité compris entre 0,05 et 10 GPa présente dans la première direction de rotation (49) une constante d'élasticité d'au moins 20 % supérieure à celle dans la seconde direction de rotation (49), de sorte dans le cas d'un couple défini agissant dans la première direction de rotation (49) sur la tige d'emmanchement (2) et dans le cas d'un couple défini agissant dans la seconde direction de rotation (49) sur la tige d'emmanchement (2), dans le cas d'une valeur absolue identique du couple défini le mouvement de rotation relatif dans la première direction de rotation (49) entre le moyen de serrage (4) comportant le taraud (6) et la tige d'emmanchement (2) est réalisé d'au moins 20 % plus petit que dans la seconde direction de rotation (49)
ou
l'élément en élastomère (7) composé d'un matériau présentant un module d'élasticité compris entre 0,05 et 10 GPa présente dans la première direction de rotation (49) une constante d'élasticité d'au moins 20 % inférieure à celle dans la seconde direction de rotation (49), de sorte dans le cas d'un couple défini agissant dans la première direction de rotation (49) sur la tige d'emmanchement (2) et dans le cas d'un couple défini agissant dans la seconde direction de rotation (49) sur la tige d'emmanchement (2), dans le cas d'une valeur absolue identique du couple défini le mouvement de rotation relatif dans la première direction de rotation (49) entre le moyen de serrage (4) comportant le taraud (6) et la tige d'emmanchement (2) est réalisé d'au moins 20 % plus grand que dans la seconde direction de rotation (49).

10. Procédé selon la revendication 9,
**caractérisé en ce que**
par le mouvement de translation relatif dans la première et la seconde direction axiale (48) entre le moyen de serrage (4) comportant le taraud (6) et la tige d'emmanchement (2) une force de pression, en particulier exclusive, est causée dans l'élément en élastomère (7), de sorte que la force de pression cause un tassement, en particulier exclusif, de l'élément en élastomère (7), en particulier d'au moins une section axiale (8, 9) de l'élément en élastomère (7).

11. Procédé selon la revendication 9 ou 10,
**caractérisé en ce que**
par le mouvement de rotation relatif dans la première et la seconde direction axiale (48) entre le moyen de serrage (4) comportant le taraud (6) et la tige d'emmanchement (2) une force de pression, en particulier exclusive, est causée dans l'élément en élastomère (7), de sorte que la force de pression cause un tassement, en particulier exclusif, de l'élément en élastomère (7), en particulier d'au moins une section tangentielle (12, 13) de l'élément en élastomère (7).

12. Procédé selon une ou plusieurs des revendications 9 à 11,
**caractérisé en ce que**
la force de pression agissant dans la première direction axiale (48) sur la tige d'emmanchement (2) et la force de traction agissant dans la seconde direction axiale (48) sur la tige d'emmanchement (2) causent une force de déformation agissant sur l'élément en élastomère (7) et cette force de déformation est appliquée, en particulier exclusivement, à une distance radiale d'un axe de rotation (47) du mandrin de taraudage (1) sur l'élément en élastomère (7).

13. Procédé selon une ou plusieurs des revendications 9 à 12,
**caractérisé en ce que**
le couple agissant dans la première direction de rotation (49) sur la tige d'emmanchement (2) et le couple agissant dans la seconde direction de rotation (49) sur la tige d'emmanchement (2) causent une force de déformation agissant sur l'élément en élastomère (7) et cette force de déformation est appliquée, en particulier exclusivement, à une distance radiale d'un axe de rotation (47) du mandrin de taraudage (1) sur l'élément en élastomère (7).

14. Procédé selon une ou plusieurs des revendications 9 à 13,
**caractérisé en ce que**
l'extrémité radiale interne de l'élément en élastomère (7) présente une distance radiale de l'axe de rotation (47) du mandrin de taraudage (1) et dans la direction tangentielle (49) l'élément en élastomère est formé exclusivement sur une zone partielle tangentielle, de sorte que l'élément en élastomère (7) est déformé exclusivement à une distance radiale de l'axe de rotation (47) et exclusivement dans une zone partielle tangentielle par la force de déformation agissant sur l'élément en élastomère (7).

15. Procédé selon une ou plusieurs des revendications 9 à 14,
**caractérisé en ce que**
au moins un élément en élastomère (7) est remplacé, en déplaçant l'au moins un élément en élastomère (7) hors d'une cavité respective (19), en particulier exclusivement, essentiellement dans la direction radiale (50) vers l'extérieur hors de l'une cavité respective (19) et ensuite au moins un autre élément en élastomère (7) est déplacé, en particulier exclusivement, essentiellement dans la direction radiale (50) vers l'intérieur dans la cavité respective (19), de sorte que de préférence exclusivement le mandrin de taraudage (1) présente dans la première et/ou la seconde direction axiale (48) une autre constante d'élasticité et/ou présente dans la première et/ou la seconde direction de rotation (49) une autre constante d'élasticité
